# EUROPEAN PATENT APPLICATION

(11) **EP 4 400 278 A1**
(43) Date of publication of application: **17.07.2024**
(21) Application number: 22867441.2
(22) Date of filing: 09.09.2022
(51) Int. Cl.: B25J 19/06

(54) **ROBOT CONTROL SYSTEM**

(30) Priority: 10.09.2021 JP 2021148199
(71) Applicant: DENSO WAVE INCORPORATED, Agui-cho Chita-gun, Aichi 470-2297 (JP)
(72) Inventor: YAMAMOTO, Tomoya, Chita-gun, Aichi 470-2297 (JP)
(74) Representative: Winter, Brandl - Partnerschaft mbB
(86) International application number: PCT/JP2022/033899
(87) International publication number: WO 2023/038120

(57) **Abstract**

There is provided a robot control system capable of suitably improving robot safety and work efficiency. The robot control system includes a safety-related unit, a situation identifying unit, and a determination criterion switching unit. The safety-related unit includes a motion judgment unit that judges a motion of a robot based on a safety-related input signal that includes parameters correlated with at least one of a force, a speed, and a position of the robot and determination criterion for the parameters stored in advance. The safety-related unit realizes a safety function of the robot by generating a safety-related output signal depending on a judged result of the motion judgment unit, thereby realizing the safety function. The situation identifying unit identifies a work condition of the robot which is in operation currently, from a plurality of work conditions which are set previously for work to be performed by the robot. The determination criterion switching unit switches the determination criterion for the parameters, which are referred by the motion judgment unit, to a determination criterion corresponding to the work condition identified by the situation identifying unit.

## Description

### [Technical Field]

The present invention relates to a robot control system.

### [Related Art]

Robots, such as industrial robots, are provided with a mechanism to control the robots so that the robots do not collide with other objects, such as workpieces, or to ensure safety in the event of such a collision. For example, Patent Document 1 illustrates a control method for servo motor control when a malfunctioning load is detected. According to this control, a malfunctioning load detection control method for a servo motor is proposed, which is characterized by generating a command applied to the servo motor. The command is to generate, for a predetermined period of time, a torque applied to the server motor, in which the torque has a predetermined magnitude and the opposite direction to the servo motor rotation which is detected immediately before the detection of a malfunctioning load.

### [Citation List]

### [Patent Literature]

[Patent Literature 1] JP-A-2001-037289

### [Summary of the Invention]

### [Technical Problem]

The main object of the present invention is to provide a robot control system that can suitably improve the safety performance and work efficiency of the robot.

### [Solutions to Problem]

According to one mode of the present invention, there is provided a robot control system, comprising
a safety-related unit for comprising a motion judgment unit that judges a motion of a robot based on a safety-related input signal that includes parameters correlated with at least one of a force, a speed, and a position of the robot which is in operation and determination criterion for the parameters stored in advance, and realizing a safety function of the robot by generating a safety-related output signal depending on a judged result of the motion judgment unit, thereby realizing the safety function;
a situation identifying unit for identifying a work condition of the robot which is in operation currently, from a plurality of work conditions which are set previously for work to be performed the robot; and
a determination criterion switching unit for switching the determination criterion for the parameters, which are referred by the motion judgment unit, to a determination criterion corresponding to the work condition identified by the situation identifying unit.

### [Effect of the Invention]

The present invention is able to provide a robot control system that can suitably improve the safety performance and work efficiency of the robot.

### [Brief Description of the Drawings]

Fig. 1 is an outlined illustration exemplifying the layout of a factory to which a robot control system according to a first embodiment of the present invention can be applied.
Fig. 2 is a perspective view showing a robot to which the robot control system according to the first embodiment of the present invention can be applied.
Fig. 3 is a block diagram showing an electrical configuration of the robot shown in Fig. 2.
Fig. 4 is a flowchart showing a flow of work done by the robot shown in Fig. 2.
Fig. 5 is an illustration comparatively outlining work scenes of the robot shown in Fig. 2.
Fig. 6 is a block diagram outlining a relationship between a safety-related unit and a non-safety-related unit which are provided in the robot control system according to the first embodiment of the present invention.
Fig. 7 is a flowchart showing an operation monitoring process performed by the robot control system according to the first embodiment of the present invention.
Fig. 8 is a table exemplifying a control device which command switching of the safety functions employed in the robot control system according to the first embodiment of the present invention.
Fig. 9 is a flowchart showing a task monitoring process performed by the robot control system according to the first embodiment of the present invention.
Fig. 10A is an illustration showing the configuration of a request command transmitted from the non-safety-related unit in the robot control system according to the first embodiment of the present invention.
Fig. 10B is a table showing the configurations of request commands transmitted from the non-safety-related unit in the robot control system according to the first embodiment of the present invention.
Fig. 11 is a flowchart showing scene change sequences performed by the robot control system according to the first embodiment of the present invention.
Fig. 12 is a table explaining determination criterion for the respective scenes expected in the robot control system according to the first embodiment of the present invention.
Fig. 13A is a graph showing a relationship between reference values of the determination criterion which are set by the safety-related unit depending on transitions of the work scenes and detected values thereof.
Fig. 13B is another graph showing a relationship between reference values of the determination criterion which are set by the safety-related unit depending on transitions of the work scenes and detected values thereof.
Fig. 14 is a flowchart showing a process for monitoring scene swinging states, in which the process is performed by the robot control system according to a second embodiment of the present invention.
Fig. 15 is a timing chart showing changes in detected values provided when the work scenes are switched by the robot control system according to the second embodiment of the present invention.
Fig. 16 is a flowchart showing a process for monitoring scene swinging states, in which the process is performed by the robot control system according to a third embodiment of the present invention.
Fig. 17 is a timing chart showing changes in detected values provided when the work scenes are switched by the robot control system according to the third embodiment of the present invention.
Fig. 18 is an illustration outlining a detection area assigned to an object, the detection area being adopted by the robot control system according to a fourth embodiment of the present invention.
Fig. 19 is a flowchart explaining a process for monitoring spatial switching states, in which the process is performed by the robot control system according to the third embodiment of the present invention.

### [Description of Embodiments]

### <1. Background leading up to the present invention>

Prior to describing specific embodiments of the present invention, the background of the inventor leading up to the present invention will first be explained. Some robot control systems applied to robots such as industrial robots have safety-related units that realize safety functions of the robots, in addition to non-safety-related units that perform drive control of the robots. For example, the safety-related unit may forcibly stop the robot in the event of a collision with a human or other obstacle, or it may monitor the force (thrust) and speed of the robot during its drive and forcibly stop the robot when its movement deviates from safety standards.

On the other hand, in recent years, advances in robot technology have led to an increase in the types of tasks that one robot can be engaged in. When one robot is engaged in a variety of tasks, it can be difficult to achieve both improved safety and increased work efficiency if the safety functions are uniform for such tasks. In view of these circumstances, the inventor has devised a configuration for switching the safety functions of the robots.

However, it is assumed that if the switching of safety functions becomes frequent, the control load in the robot control system increases excessively and the original functions of the robot control system (i.e. the functions to perform the drive control of the robot) is affected significantly. For example, if the safety functions are to be changed every time the position and orientation of the robot is changed as work motions, the foregoing affects will become more strengthened. Such an influence is undesirable because it is a factor that causes a reduction in the working efficiency of the robot. It is also undesirable if the switching operation of the safety functions instructed by the user is mandatory, as this is a factor that reduces the convenience of the robot. Thus, there is still room for improvement in the configuration for changing the safety functions in order to realize improved safety and work efficiency of the robot and to promote the use of the robot.

The present invention was made in view of the foregoing problems, the main object of which is to suitably improve the safety and work efficiency of the robot.

The means for solving the foregoing conditions and dawabacks are described below.

First means: There is a robot control system, comprising:
a safety-related unit for comprising a motion judgment unit that judges a motion of a robot based on a safety-related input signal that includes parameters correlated with at least one of a force, a speed, and a position of the robot which is in operation and determination criterion for the parameters stored in advance, and realizing a safety function of the robot by generating a safety-related output signal depending on a judged result of the motion judgment unit, thereby realizing the safety function;
a situation identifying unit for identifying a work condition of the robot which is in operation currently, from a plurality of work conditions which are set previously for work to be performed the robot; and
a determination criterion switching unit for switching the determination criterion for the parameters, which are referred by the motion judgment unit, to a determination criterion corresponding to the work condition identified by the situation identifying unit.

It is desirable for a single robot to be responsible for plurality of tasks or plurality of kinds of tasks to promote automation in manufacturing and other operations. However, if the safety functions of the robot are made uniform regardless of differences of the work conditions, it becomes difficult to balance both the improvement of safety function and the improvement of work efficiency of the robot. In this respect, in the configuration shown in the present feature, the work conditions are identified and the criteria for monitoring are changed for each work condition. This criterion changes for each work condition can contribute to improving both the safety function and the work efficiency of the robot.

By the way, in order to improve robot safety, it is possible to adopt a configuration in which the safety functions are sequentially changed each time the robot's operating states (positions, directions, speeds, etc.) change responsively to the motions of the driven robot. However, such a configuration would increase a control load on the robot control system, which would affect the original function of the robot control system (i.e. controlling drive of the robot). In this respect, it is important to take into account that the motions of the robot change with each task. There is a clear technical significance in the configuration of switching the determination criteria for each work scene as shown in the present feature, as it can improve safety functions while reducing the impact on the original function given to the robot control system.

### <2. First embodiment

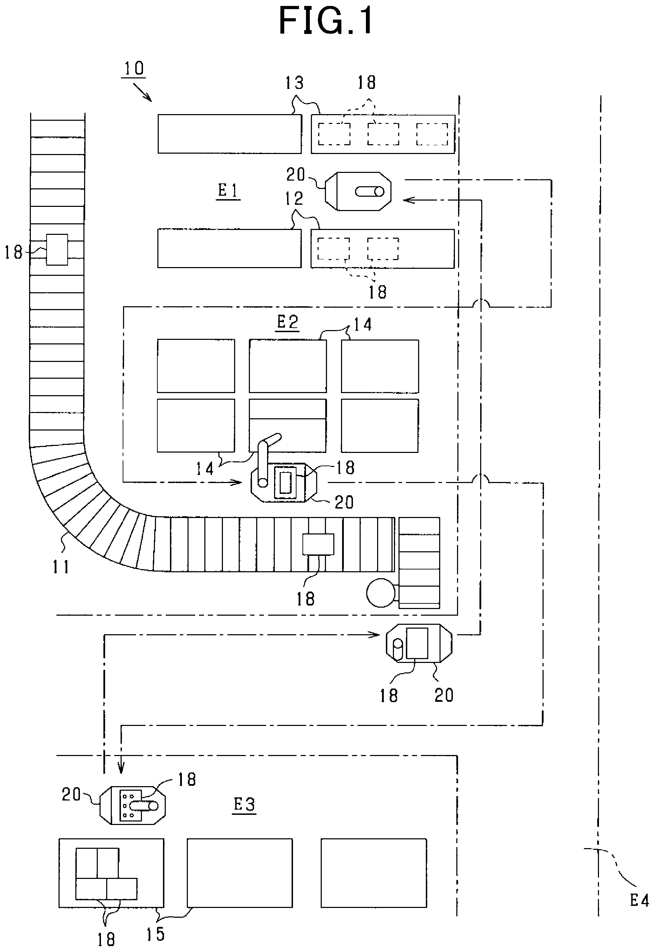

The following is a description of the first embodiment embodied in an industrial robot used in a factory, etc., with reference to the drawings. First, with referring to Fig. 1, a factory to which the robot is applied will be described.

Areas E1, E2, E3 and E4 are arranged in one section of the plant 10. These areas include a stock area E1 with shelves 12 for storing materials delivered by a conveyor 11 and shelves 13 for storing empty containers (so-called returnable boxes) 18; a processing area E2 with a plurality of processing machines 14 for forming workpieces; a collection area E3 where formed workpieces are accumulated, and an aisle E4 connecting those areas E1 - E3. The robot 20 shown in the present embodiment moves among the areas E1 - E3 through the aisle E4 and engages in the work defined in each area.

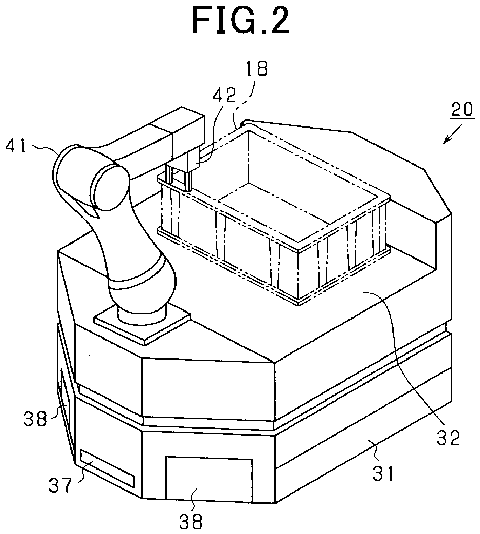

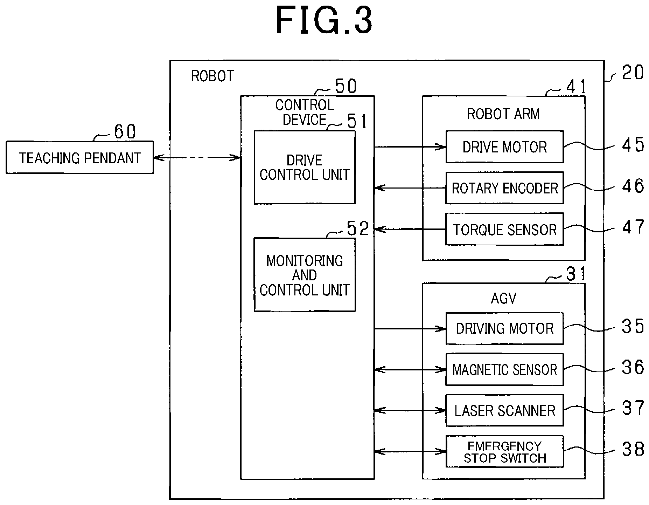

As shown in Fig. 2, the robot 20 is equipped with an AGV (Automated Guided Vehicle) 31, a vertically articulated robot arm 41 mounted on the AGV 31, and a control device 50 (see Fig. 3) that controls the AGV 31 and robot arm 41.

The AGV 31 is equipped with a driving motor 35 and a magnetic sensor 36 capable of detecting the magnetism of guide tapes laid on the floor of the plant 10 for magnetic guidance. The control device 50 is configured to perform travel control of the AGV 31, e.g., drive control of the driving motor 35 and steering control thereof, based on the magnetic field and other necessary information detected by the magnetic sensor 36. In the present embodiment, guide tapes are arranged in those areas E1 - E3 and aisle E4 to mutually connect those areas E1 - E3. The guide tapes define the movement path (driving route) of the robot 20.

On the top surface of the body of the AGV 31, a loading section 32 is formed on which the container 18 is placed, and the AGV 31 can move with the container 18 placed on the loading section 32. The AGV 31 is also equipped with a laser scanner 37 for detecting obstacles in the path of the robot 20 and an emergency stop switch 38 that is operated by the operator in an emergency case. The laser scanner 37 and emergency stop switch 38 function as input units for the safety-related unit which will be described below, and are configured to perform an emergency stop of the robot 20 when an obstacle is detected or when an emergency stop operation is detected. In this emergency stop, not only the AGV 31 but also the robot arm 41 is subject to its stop.

The robot arm 41 has a base fixed to the top surface of body of the AGV 31 (, which is positionally next to the loading section 32 on the top surface), an arm attached to the base, and a hand 42 (serving as an end effector) at the end of the arm. The arm is composed of a plurality of movable sections connected together by a plurality of joints (axes). Specifically, the arm has, for each joint (axis), a drive motor 45 that drives each of those moving members, a rotary encoder 46 that detects the rotation angle of each joint (axis), and a torque sensor 47 that detects the rotation torque generated at each joint (axis) (see Fig. 3). As shown in Fig. 3, the drive motor 45, rotary encoder 46, and torque sensor 47 are communicably connected to the control device 50. The drive control unit 51 arranged in the control device 50 is configured to perform drive control of each drive motor 45, based on the rotation angle detected by the rotary encoder 46 and other information acquired for the control.

In the present embodiment, the control device 50 includes the drive control unit 51, as described, and a monitoring control unit (serving as a safety controller) 52. The drive control unit 51 is responsible for controlling the drive of various parts of the robot 20, such as the AGV 31 and robot arm 41. The drive control unit 51 includes a semiconductor integrated circuit capable of computing and a storage device. The semiconductor integrated circuit capable of computing is, for example, an arithmetic device such as a CPU (Central Processing Unit), an ASIC (Application Specific Integrated Circuit), and an MPU (Micro Processor Unit); and a PLD (Programmable Logic Device) such as an FGPA (Field Programmable Gate Array) and an FPAA (Field Programmable Analog Array). One of these devices can be used alone. Furthermore, a combination of two or more types of devices can be used.

The storage devices include a main memory and an auxiliary memory. The main memory includes SRAM (Static RAM), DRAM (Dynamic RAM), pseudo SRAM, FeRAM (Ferroelectric RAM), MRAM (Magnetoresistive RAM), ReRAM (Resistive RAM), and PRAM (Phase change RAM (PRAM), as typical examples. Of these memory devices, one of these types alone or a combination of two or more types can be used. The auxiliary storage devices include a hard disk drive (HDD), a solid state drive (SSD), an optical disk, a magneto-optical disk, and a flash memory, as typical examples. Of these storage devices, the system can be composed of one of these types alone or in combination of two or more devices. The drive control unit 51 may include a device in which the main storage device and/or auxiliary storage device and a semiconductor integrated circuit capable of computing are preincorporated in one piece.

The monitoring control unit 52 also realizes the safety function of the robot 20 by outputting safety-related output signals in response to safety-related input signals. The monitoring control unit 52 also includes a semiconductor integrated circuit capable of computing and a storage device. This monitoring control unit 52, like the drive control unit 51, is equipped with the above-mentioned various arithmetic-capable semiconductor integrated circuits and storage devices, and is appropriately configured using these circuits and devices. In the present embodiment, by way of example, the monitoring control unit 52 will be described as comprising an FPGA (safety FPGA).

A teaching pendant 60 can be connected communicably to the control device 50 via a communication cable. A setting support application is installed in the teaching pendant 60 to assist the user in setting up the movements of the robot 20 (including movements according to instructions on teaching). The teaching pendant 60 sends a motion sequence (motion program) indicating the motions of the robot 20 set by the user to the control device 50. The drive control unit 51 of the control device 50 performs drive control of the AGV 31 and robot arm 41, based on this motion sequence. The teaching pendant 60 also includes a semiconductor integrated circuit capable of computing and a storage device. The teaching pendant 60, like the drive control unit 51, can be suitably configured with the above-mentioned various arithmetic-capable semiconductor integrated circuits and storage devices.

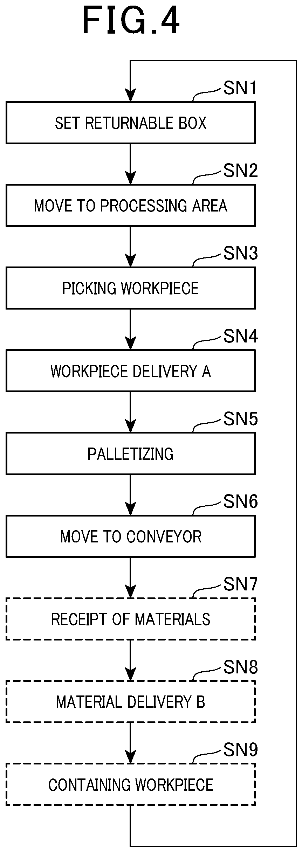

Referring to Figs. 1 and 4, the tasks that robot 20 is responsible for will now be described. The robot 20 first sets an empty container 18 on itself in the stock area E1 (scene SN1). Specifically, the robot 20 extends its robot arm 41, grabs an empty container 18 stored on the shelf 13, and places the container 18 on its own loading section 32. Thereafter, the robot arm 41 returns to the standby posture and moves through the aisle E4 to the processing area E2 (scene SN2). The robot arm 41 in the standby posture avoids protruding from the AGV 31 when the robot 20 is viewed from above.

In the processing area E2, the robot 20 collects workpieces that have completed processing from a plurality of processing machines 14 positioned in the processing area E2 (scene SN3). Specifically, the robot 20 extends its robot arm 41, grabs the workpiece held in the chuck of the processing machine 14 with the hand 42, and removes the workpiece to accommodate it into the container 18 which has been set. The robot 20 repeats such motions for each processing machine 14, and when the number of collected workpieces reaches a predetermined number, the collection work is complete. After the collection is completed, the robot 20 returns the robot arm 41 to the standby posture and delivers the container 18 containing the workpiece through the aisle E4 to the collection area E3 (scene SN4).

In the collection area E3, the robot 20 unloads the container 18 containing the workpieces therein. Specifically, the robot 20 stacks the containers 18 on the pallets 15 (scene SN5). The group of containers 18 stacked on the pallet 15 is successively delivered to the next process (e.g., another machining process).

In the above scene SN3, the workpieces are stored in the container 18 in an aligned state, but if the workpieces are piled up in the container 18 due to some factor, it may interfere with stacking of containers 18. Therefore, in the scene SN4 described above, the robot arm 41 performs work to change the position of the workpieces in the container 18 as necessary. This change operation is to be performed in parallel with the foregoing delivery.

After finishing unloading in the collection area E3, the robot 20 returns the robot arm 41 to the standby posture and moves from the collection area E3 through the aisle E4 to the end of conveyor 11 (scene SN6). Then, the robot 20 receives the container 18 containing therein the workpiece material from the conveyor 11 (scene SN7). Specifically, the container 18 is set in the loading section 32 by a crane attached to the conveyor 11. In this reception, the robot arm 41 temporarily changes its direction to avoid a collision with the container 18.

The robot 20 with the container 18 delivers the container 18 through the aisle E4 to the stock area E1 (scene SN8). After reaching the stock area E1, the robot 20 stores the set container 18 on the shelf 12 (scene SN9).

After the storage is completed, the robot 20 repeats the sequence of scenes SN1 - SN9 in the same way as the above again. Thus, in the present embodiment, the work routine of the robot 20 is provided as shown in the scenes SN1 - SN9. It is noted that the partial scenes SN7 - SN9 are skipped depending on operating statuses of the conveyor 11.

The above switching of scenes is preferably performed at the timing when all of the multiple tasks of the current scene have been completed. This can reduce unwanted behavior of the robot 20 that may be caused by switching the scenes in the middle of a single task, and improve the safety of the robot 20.

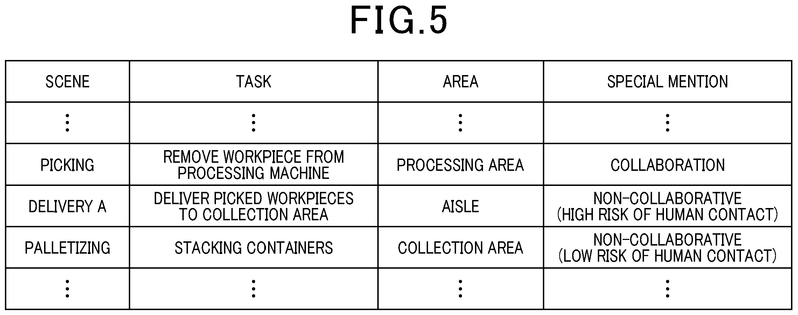

In the scenes SN1 - SN9, not only the area where the robot 20 is located and the specifics of the work, but also the relationship with people (i.e., with or without collaboration) are different scene by scene. Some of the scenes in the work routine, specifically the scene SN3 to scene SN5, are explained below with reference to Fig. 5. For convenience, "scene" is also referred to as "work scene" in the following explanation. The work scene is an example of a work situation.

The processing area E2, where the scene SN3 (picking) is performed, is a collaboration area where area personnel (humans) work together with the robot 20. Specifically, the work of taking out materials from the container 18 stored on the shelf 12 and putting them into the processing machine 14, the work of setting up each processing machine 14, and the work of checking the operations of each processing machine 14 are performed in the processing area E2 are the roles of the person in charge of managing the processing area E2. At the same time, the collection of workpieces after the processing is the role of the robot 20. In other words, in the processing area E2, both the person in charge of the area and the robot 20 share the entire work which should be performed by the processing machine 14.

For the work expressed by the scene SN4 (delivery), the work area is defined as the aisle E4, meanwhile for the work expressed by the scene SN5 (palletizing), the work area is defined as the collection area E3. The work in the scenes SN4 and SN5 differs from that of scene SN3 in that they are non-collaborative tasks performed independently by the robot 20. However, while humans (area personnel, etc.) are allowed to enter the case of scene E4, human entry is basically prohibited in case of scene SN5. In other words, between the scene SN4 and the scene SN5, there is a difference in the probability of contact which may occur between the robot 20 and a person due to a difference in how to use the areas. Specifically, the probability of contact between persons and the robot 20 is higher in the scene SN4 than that which may occur in the scene SN5.

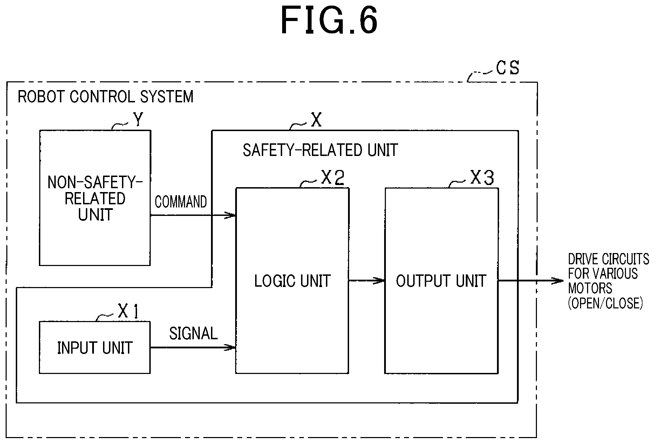

Thus, since the robot 20 may come into contact with humans during the work routine, the robot 20 is equipped with a configuration to enhance the safety of the robot 20 in addition to the laser scanner 37 and emergency stop switch 38. The following is a supplemental explanation of the configuration pertaining to the safety functions of the robot 20 with reference to Fig. 6.

The robot control system CS applied to the robot 20 is installed in robot 20 itself in the present embodiment and performs various controls assigned to the robot 20. The robot control system CS is functionally classified into a safety-related unit X and a non-safety-related unit Y. The safety-related unit X is configured to realize the safety function of the robot 20 by outputting safety-related output signals in response to safety-related input signals. The non-safety-related unit Y is configured to drive and control the AGV 31 and robot arm 41 when safety is confirmed by the safety-related unit X and the movements of the AGV 31 and the robot arm 41 are permitted.

The safety-related unit X includes an input unit X1, a logic unit X2, and an output unit X3, in which the input unit X2 inputs the foregoing safety-related input signals to the logic unit X2, the logic unit X2 performs safety checks, and the output unit X3 outputs the safety-related output signals. In the present embodiment, the input unit X1 includes various physical input means such an emergency stop switch 38, and various sensors such as laser scanner 37, rotary encoder 46, torque sensor 47, and other necessary members. In the present embodiment, the logic unit X2 includes a monitoring control unit (safety controller) 52 provided in the control device 50. The output unit X3 includes various output means such as safety contactors attached to the control device 50. The logic unit X2 is realized by a semiconductor integrated circuit capable of arithmetic operations and a storage device, which are included in the monitoring control unit 52 which constitutes the logic unit X2. Hence the various functions of the logic unit X2 are realized.

The safety contactor is connected to the switch in the drive circuits for the driving motor 35 of the AGV 31 and/or the drive circuits for the driving motor 45 of the robot arm 41. The safety-related output signals are outputted from the safety contactor to these switches. This interrupts the power supply to the respective motors 35 and 45, thereby forcing the robot 20 to stop.

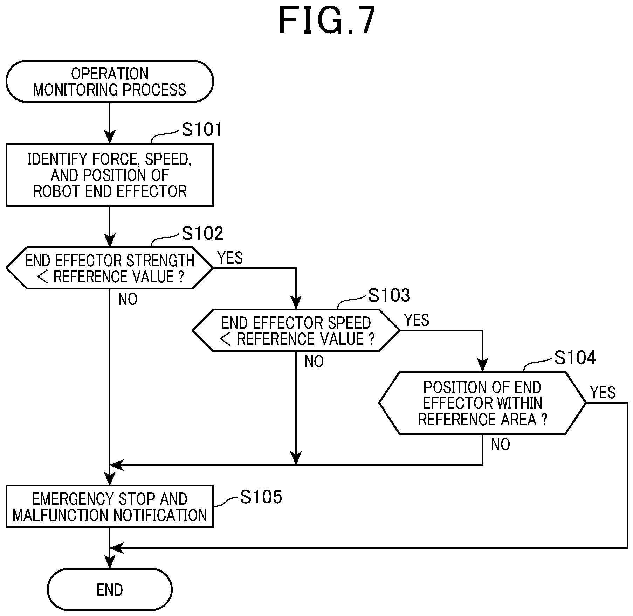

As described above, the safety-related unit X shown in the present embodiment includes the foregoing rotary encoder 46 and torque sensor 47 in addition to the laser scanner 37 and the emergency stop switch 38. In other words, detection signals outputted from the rotary encoder 46 and torque sensor 47 are inputted to the logic unit X2, which serve as the foregoing safety-related input signals. The logic unit X2 monitors the motions of robot 20 based on the detection signals coming from the rotary encoder 46 and torque sensor 47. An operation monitoring process performed by the logic unit X2 (i.e. the monitoring control unit 52 of the control device 50) as part of periodic processing will now be described with reference to the flowchart shown in Fig. 7.

In the operation monitoring process, the logic unit X2 first performs step S101 to specify a force (thrust), speed, and position (coordinates) of the end effector (so-called tool center point) of the robot 20 (robot arm 41) based on the detection signals coming from the rotary encoder 46 and torque sensor 47 described above in step S101.

In the subsequent step S102, the logic unit X2 determines whether the force of the end effector is weaker than a predetermined reference value (i.e., a force threshold). This reference value is stored in advance in the memory of control device 50. If the force of the end effector is weaker than the reference value, the logic unit X2 proceeds to step S103 to determine if the speed of the end effector is slower than a reference value (i.e., a speed threshold). If the speed of the end effector is slower than the reference value, the logic unit X2 proceeds to step S104 to determine if the position of the end effector is within a reference range (i.e., an operative allowable range). In other words, the logic unit X2 is equipped with a motion judgment unit that judges the robot's motions based on the safety-related input signals and determination criterion. If the position of the end effector is within the reference range, the logic unit X2 terminates the motion control process. In the following description, each reference value and reference range are also referred as determination criteria.

On the other hand, if any of the foregoing three requirements shown in steps S102 to S104 is not met, the logic unit X2 generates the prescribed safety-related output signals. Then, the logic unit X2 outputs the safety-related output signals to the target parts via the output unit X3 to realize the safety functions. Specifically, the logic unit X2 outputs the safety-related signals via the output unit X3 to execute respective processes for emergency stop and malfunction notification in step S105, and then this operation monitoring process is terminated. In the process for the emergency stop, the logic unit X2 forcibly shuts off the power supplied to the motors 35 and 45 via the output unit X3 to stop the motions of the robot 20 (hereinafter, also referred to as emergency stop). Meanwhile, in the process for the malfunction notification, the logic unit X2 turns on warning lamps equipped on the robot 20 via the output unit X3, and transmits information about the occurrence of malfunctions to the management system of factory 10. Thus, in this system, the force, speed, and position of the end effector of the robot 20 are used as operation monitoring parameters for monitoring the motions of the robot 20.

The operation monitoring parameters are not limited to the force, speed, and position of the end effector of the robot 20. Instead of or in addition to these parameters, other parameters indicating the force (rotational torque), speed (rotational speed), and position of each joint part (axis) can be used as operation monitoring parameters.

In this system, the determination criterion for the operation monitoring parameters also functions as targets which are for restraining (limiting) the motions of the robot arm 41 (specially, the end effector). For example, when the user teaches the robot 20 to move by directly touching the robot arm 41, etc., the robot arm 41 may accidentally move due to momentum. In such operations, motions that exceeds the above determination criterion may be given to the robot 20. Even in such a case, the motions of the robot arm 41 are compensated so that the motions do not exceed the determination criterion. This prevents frequent occurrences of emergency stops due to exceeding the determination criterion during designated work.

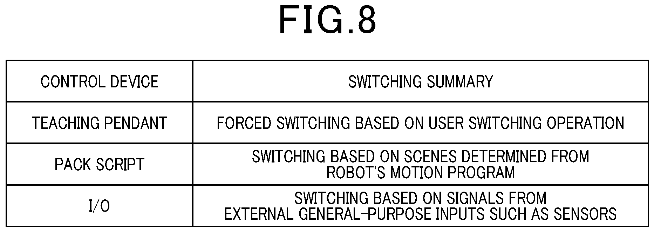

When the robot 20 is engaged in various tasks, the safety function becomes uniform, and it is assumed that it will be difficult to balance the improvement of safety and the improvement of work efficiency. In the present embodiment, the safety function of the robot 20, specifically, the determination criteria of each of the operation monitoring parameters, can be switched in multiple steps. The configuration for switching the safety functions will be explained below with reference to Fig. 8.

Three control devices are provided for switching safety functions by safety-related unit X: (1) the teaching pendant 60, (2) the drive control unit 51 (see pack script for details), and (3) external general-purpose input/output (hereinafter referred to as "I/O") are provided as control devices. Any of these three control devices corresponds to the non-safety-related unit Y. For general-purpose input/output, the external device to which it is connected can also function as the non-safety-related unit. In this case, the external device also comprises a semiconductor integrated circuit capable of computing and a storage device and can be appropriately configured with the various types of semiconductor integrated circuits capable of computing and storage devices, etc. described above, as well as the drive control unit 51.

An application for safety function switching is installed in the teaching pendant 60. Therefore, when the user performs the switching operation of the determination criterion of the operation monitoring parameters, a set of information including diagnostic information (CRC, corresponding to the first diagnostic information) is sent from the teaching pendant 60 serving as the non-safety-related unit Y to the safety FPGA. This diagnostic information is used to diagnose whether instruction information including a command (a request command) which instructs the switching and the command has been successfully transmitted and received. The safety FPGA switches the determination criterion of the operation monitoring parameters. based on the command contained in this instruction information. For example, when the user performs the teaching described above, switching the determination criterion of the operation monitoring parameters according to the user's operation can suitably suppress the safety function from interfering with the teaching work. A specific configuration of the logic unit X2 of the safety-related unit X is not limited to the safety FPGA, but can also be configured by a microcontroller or CPU.

The I/O is connected to various sensors and a control center of the factory 10 for communication, and the safety function is allowed to be switched from external devices other than the teaching pendant.

The robot control system CS shown in the present embodiment has a configuration that enables active switching of the safety functions based on the judgment of the control device 50. Specifically, the configuration is such that the determination criterion of the operation monitoring parameters are switched according to the work scenes of the robot 20. The task monitoring process executed by the drive control unit 51 as part of the periodic processing to achieve such switching will now be described below.

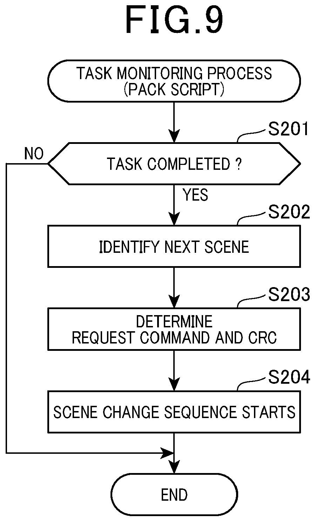

First, the drive control unit 51 identifies a work current situation of the robot 20, from a predefined number of work situations (i.e., work scenes) in which the robot 20 performs work. In the operation programs of the robot 20, the motions of the robot 20 in each work scene are previously defined by a combination of multiple tasks. First, in the task monitoring process shown in Fig. 9, the drive control unit 51 determines, at step S201, whether it is the timing when all tasks related to the work currently in progress are completed.

When it is determined that it is not the timing showing that all the tasks are completed, the drive control unit 51 makes a negative judgment in step S201 and terminates the task monitoring process as it is. In contrast, when it is determined that all the tasks have been completed, the drive control unit 51 makes a positive judgment in step S201 and proceeds to step S202. The above-mentioned operation program referenced by the drive control unit 51 includes scene-related information to specify the next work scene at the time when the last task is completed. Therefore, in step S202, the drive control unit 51 identifies the next work scene based on this scene-related information. As described above, the drive control unit 51 functions as a situation identifying unit (in the present embodiment, a scene identifying unit) in steps S201 and S202.

Next, in step S203, the drive control unit 51 determines the instructions for switching the safety function to the safety FPGA of the safety-related unit X according to the work scene specified in step S202. More specifically, the drive control unit 51 sets a request command that requests switching safety function and the CRC which is diagnostic information for diagnosing whether the request command has been successfully sent and received. The safety function in the present embodiment is specified for each of the work scenes (scenes SN1 to SN9) of the robot 20. In other words, it can be said that the request command set in step S203 is requesting the safety-related unit X to switch work scenes. In light of this situation, the request command that directs the safety function switching can correspond to a "scene change command.

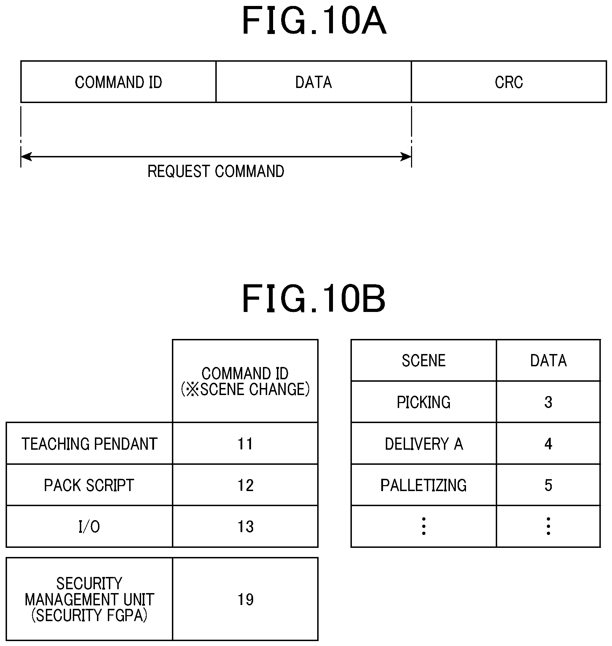

Here, a supplementary explanation of the request command and CRC will now be provided with reference to Figs. 10A and 10B. The request command consists of a command ID (corresponding to first information) and data (scene numbers; corresponding to second information) indicating the determination criteria to be referred in subsequent judgments. The command ID includes information to identify a control device that is a sender from which the command is sent and information indicating that this request is for switching the safety function.

If the sender of the request command for switching the safety functions is the teaching pendant 60, command ID = "11". If the source of the request command is the drive control unit 51 (pack script in detail), the command ID = "12", and if the source is an I/O, the command ID = "13".

When the request command for switching the safety functions is set, the data is one of the nine numbers from "1" to "9". For example, data = "3" when the next work scene is scene SN3 (picking), data = "4" when the next work scene is scene SN4 (delivery), and data = "5" when the next work scene is SN5 (palletizing).

The CRC is a checksum of the command ID and the number of the data. For example, if the drive control unit 51 is the sender and the next work scene is a delivery indicated by the scene SN4, CRC = "12" + "4" = "16".

After the request command and CRC are set in step S203, the scene change sequence is started in step S204 to terminate the task monitoring process (see Fig. 9). Thereafter, the task monitoring process is avoided until the end of the scene change sequence.

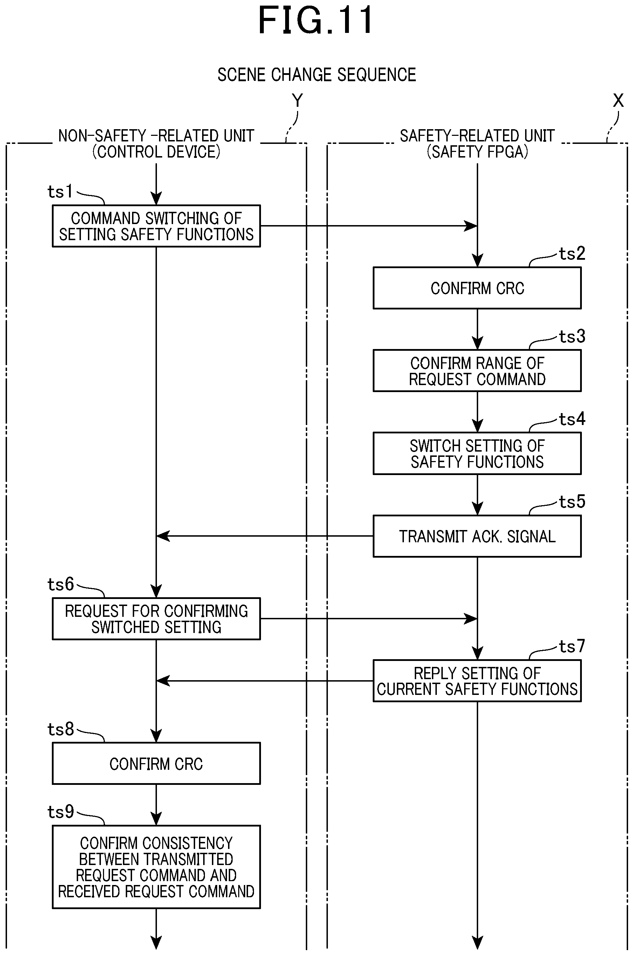

Next, the scene change sequence executed by the non-safety-related unit Y and the safety-related unit X (i.e., the safety FPGA in the present embodiment) will now be described with reference to Fig. 11. In the following, based on the instructions from the drive control unit 51 included in the non-safety-related unit Y, the safety-related unit X switches the determination criterion for parameters referred by the motion judgment unit of the safety-related unit X into determination criterion corresponding to an identified work situation (i.e., a work scene). In the following scene change sequence, the safety-related unit X functions as a determination criterion switching section.

In the scene change sequence, the non-safety-related unit Y first instructs the safety-related unit X to switch the safety functions of the safety-related unit X. Specifically, the switching of the determination criterion of the operation monitoring parameters is instructed. More specifically, a group of information including a request command serving as instruction information and diagnostic information including CRC is sent to the safety-related unit X (see step ts1).

Based on the receipt of the instructions from the non-safety-related unit Y, the safety-related unit X first determines whether the received instructions have reached the safety-related unit X normally based on the information for diagnosis. Specifically, the safety-related unit X diagnoses whether there are any malfunctions such as corruption in the request command and CRC. More specifically, the safety-related unit X determines whether the number of the command ID of the request command plus the number of the data match the CRC (see step ts2). When there is a match between those numbers, the safety-related unit X assumes that this instruction was successfully sent and received. Then the safety-related unit X diagnoses whether the request command itself, which is the next instruction, is normal. Specifically, the safety-related unit X refers to the command ID to specify that the instruction this time is a switch of the safety functions, and determines whether the data is within the range corresponding to the command ID received this time (see step ts3). As mentioned above, if the command ID is "11" to "13", the data will be any one of "1" to "9". If the data of this time is any one of "1" to "9", the safety-related unit X judges that the request command is normal.

If the diagnosis is not normal at step ts2 or step ts3, the safety-related unit X notifies the control center of factory 10 etc. that a communication error or other malfunction has occurred, and this scene change sequence is terminated.

If this request command is diagnosed as normal, safety-related unit X accepts the command and switches the safety function according to the instructions of non-safety-related unit Y. In other words, safety-related unit X switches the determination criterion of the operation monitoring parameters (see step ts4). Specifically, the safety-related unit X (i.e., the memory of the control device 50) stores therein relationship information showing correspondences between the numbers of the data and each pf the operation monitoring parameters. The safety-related unit X switches the operation monitoring parameters based on the number of the specified data and the correspondence stored in the memory.

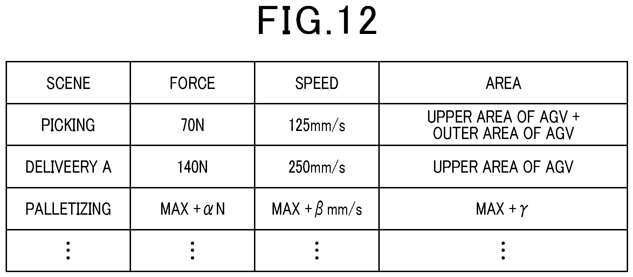

For example, as shown in Figure 12, the case is illustrated where the next work scene is "picking" with data = "3". In this example, a determination criterion for the operation monitoring parameters of force is 70N, a determination criteria for the operation monitoring parameters of speed is 125 mm/s, a determination criteria of the operation monitoring parameters of position is "an upper area of the AGV 31 + an outer area of the AGV 31 (outer area in the plane view of robot 20) considering the workpiece removal operation." In this case, if the end effector force exceeds 70N, if the end effector speed exceeds 125 mm/s, or if the end effector position is outside "the upper area of the AGV 31 + extended area for picking", the robot 20 will be brought to an emergency stop.

If the next work scene is "delivery" with data = "4", the determination criteria of the operation monitoring parameters of the force is 140N, the determination criteria is 250 mm/s for the operation monitoring parameters of the speed, and a determination criterion is an upper area of the AGV 31 for the operation monitoring parameters of the position. In this case, if the end effector force exceeds 140N, if the end effector speed exceeds 250 mm/s, or if the end effector position is outside the upper area of the AGV 31 (when the robot arm 41 extends beyond the AGV 31 in plan view), the robot 20 is brought to an emergency stop based on one of such conditions.

If the next work scene is "palletizing" with data = "5", a determination criteria of the operation monitoring parameters for the force is "an upper limit of capability (maximum strength) + aN", a determination criteria of the operation monitoring parameters for the speed is "an upper limit of capability (maximum speed) + β mm/s", and a determination criteria for the position operation monitoring parameters is "an upper limit of capability (maximum range of motions) + γ." In this case, since any of the determination criterion is above the upper limits of capability in such cases, an emergency stop is effectively avoided.

Returning to the explanation in Fig. 11, after the switchover of the safety function (determination criteria of the operation monitoring parameters) is completed, the safety-related unit X informs the non-safety-related unit Y that the instructions have been received. Specifically, an acknowledge signal is sent to the non-safety-related unit Y (see step ts5). When the non-safety-related unit Y receives an acknowledge signal from the safety-related unit X, the non-safety-related unit Y requests information from the safety-related unit X to specify the settings of the safety function after switching (see step ts6). The information for this request is specifically information to specify the determination criterion of the operation monitoring parameters that are currently set as the reference target. Diagnostic information (e.g. CRC) may also be added in this request.

In response to the confirmation request from the non-safety-related unit Y, the safety-related unit X sends to the non-safety-related unit Y i) a request command (in detail, a command that resembles the request command) serving as information for specifying the above determination criterion, and ii) a CRC (second diagnostic information) for diagnosing whether the request command has been successfully sent and received (see step ts7). This enables the non-safety-related unit Y to respond to the confirmation request. Like the foregoing request command from the non-safety-related unit Y, the request command from the safety-related unit X includes i) information to identify the sender as the safety-related unit X, ii) a command ID including information to identify the sender as the safety-related unit X, ii) information to indicate that this request is for a switchover of the safety functions, and iii) data (the scene number) indicating the determination criterion to be referred in the subsequent determination.

Moreover, the CRC is the number obtained by adding the command ID number of the command to be returned currently and the data number. For example, if the current setting corresponds to "palletizing" in scene SN5 which responds to a request from the non-safety-related unit Y, the command ID = "19" and the data number = "5", thus being CRC = "24" which is returned. It is sufficient if the CRC is determined based on the command ID and the data number, and the specific calculation method of the CRC is arbitrary.

The sum of the command ID and data of the request command sent from the safety-related unit X to non-safety-related unit Y is inconsistent with the sum of the command ID and data of the request command sent from the non-safety-related unit Y at the start of the currently performed sequence. Similarly, the CRC associated with the request command sent from the safety-related unit X to the non-safety-related unit Y in in consistent with the CRC associated with the request command sent from the non-safety-related unit Y to the non-safety-related unit Y at the start of the currently performed sequence.

The non-safety-related unit Y, which received the response from the safety-related unit X, diagnoses whether this response has been successfully received, based on the CRC, which is the second information for diagnosis. In other words, the non-safety-related unit Y diagnoses whether this response has been successfully sent and received, based on the request command and CRC. Practically, the non-safety-related unit Y determines whether the number of the command ID of the request command plus the number of the data is equal to the CRC (see step t8). If the added number is equal to the CRC, the non-safety-related unit Y determines that this reply has been successfully sent and received, and then proceeds to determination of whether the safety functions of the safety-related unit X has been switched over normally in response to the request sent from the non-safety-related unit Y. In other words, the non-safety-related unit Y diagnoses whether the determination criterion actually set in the safety-related unit X are consistent with the determination criterion specified by the instructions included in the instruction information. Specifically, the non-safety-related unit Y stores therein the relationship between the command ID of the request command and the date which have been sent from safety-related unit X. Therefore, the non-safety-related unit Y uses such relationship to determines whether the received command ID and data are consistent with the command ID of the request command and the data sent by the unit Y itself to the safety-related unit X.

The scene change sequence is completed when the response from the safety-related unit X is confirmed to be consistent with its own instructions.

In the present embodiment, the switching of the determination criterion by the safety-related unit X is performed after all tasks assigned to the work scenes have been completed. In this way, when the previous work scene is completed and the transition is made to the subsequent work scene, the control load in the system can be suitably distributed, compared to a configuration in which switching is performed during work by performing the switching between the work scenes. In addition, when moving to the next work scene, it is highly likely that the distance to people, etc. will change due to changes in the situation. Therefore, the configuration of switching in preparation for the next scene is also desirable to improve the safety of the robot.

The switching of the determination criterion performed by the safety-related unit X is performed after all tasks in the work scenes have been completed. In other words, the switching is performed after the completion of the tasks under execution. In this way, the switching of the determination criterion by the safety-related unit X is not possible until after the completion of the single task under execution. This prevents the occurrence of events such as a normally problem-free robot motion being detected by the monitoring, and reduces occurrence of emergency stops, etc. of the robot, thereby improving work efficiency.

According to the first embodiment detailed above, the following effective advantages can be obtained.

When switching the safety functions (determination criterion), an instruction is sent from the non-safety-related unit Y to the safety-related unit X. This instruction consists of a request command and a CRC. Therefore, the safety-related unit X diagnoses whether this instruction has been received normally based on the request command and CRC, and also whether the instruction itself is normal. If the diagnosis shows no abnormality or malfunction, the safety-related unit X accepts the instruction from the non-safety-related unit Y. The safety-related unit X then switches the determination criterion according to the received instruction. In other words, even if the non-safety-related unit Y sends the instruction, if the safety-related unit X determines that there is no abnormality or malfunction in the instruction, which may be caused due to a transmission error, etc., the determination criterion are switched. In this way, the safe switching instructed by the non-safety-related unit Y is realized. This can suitably improve the operability for changing the safety functions in the robot control system CS.

Next, the safety-related unit X informs the non-safety-related unit Y that the unit X has received the instruction. Upon receiving this notification, the non-safety-related unit Y requests the safety-related unit X for information to specify the determination criteria (determination criteria after switching) that is currently being referred to. The safety-related unit X responds to this request and sends a set of information consisting of the CRC to the non-safety-related unit Y. The non-safety-related unit Y diagnoses whether the response from the safety-related unit X has been successfully received based on the CRC. and also whether the determination criteria actually set is the determination criteria specified by the initial instruction. In other words, the non-safety-related unit Y can check whether the switchover of the safety functions in the safety-related unit X has been successfully performed as a result of its own instruction.

According to the configuration shown in the present embodiment, even when the safety function in the safety-related unit X is switched from the non-safety-related unit Y, the switch over can be handled appropriately. This appropriate handling prevents a decrease in the reliability of the safety function changes. Therefore, the restrictions on the input to change the safety function are not as restrictive as in the case where the input from input unit X1 (so-called safety input) is used. This can suitably improve the operability of changing the safety functions.

Furthermore, in the foregoing embodiment, two round-trip communications are performed between the non-safety-related unit Y and the safety-related unit X, with a switchover of the safety functions performed therebetween. Furthermore, each time one round-trip communication is performed, either the safety-related unit X or non-safety-related unit Y uses the first or second diagnostic information to check whether normal communication has been performed. The normal communication indicates that the safety-related unit X and the non-safety-related unit Y are likely to operate normally. Therefore, by confirming the normality of the communication twice, it is possible to confirm with higher probability that both of the safety-related unit X and non-safety-related unit Y are operating normally. In addition, by the two round-trip communications between the non-safety-related unit Y and the safety-related unit X with a switchover of the safety functions therebetween, it is shown that both of the non-safety-related unit Y and the safety-related unit X are in normal operation during the switchover of the safety functions.

Incidentally, when one robot is engaged in various tasks, enabling the robot to change (operate) the safety functions according to the various tasks is advantageous in improving the robot's work efficiency while taking safety into consideration. The ability to switch the safety functions which is performed by the non-safety-related unit Y is also desirable to promote the application of the robot to multiple types of work and to promote factory automation.

As shown in the present embodiment, it is meaningful to check the type of instructions stored in advance in the safety-related unit X against the currently issued instructions. In other words, it is possible to diagnose whether the instructions from the non-safety-related unit Y are themselves normal. In such a case, if commands are damaged due to a sticking bit or a communication error, etc., it can be suitably avoided from a state where the safety functions are switched based on the corrupted command.

When switching between multiple types of determination criterion (a force reference, a speed reference), it is possible to specify a pre-defined combination of these criteria (scene numbers) instead of specifying each of the determination criterion. This prevents the instructions from the non-safety-related unit Y to the safety-related unit X from becoming logically complex. This is a desirable configuration to increase the number of tasks that the robot can engage in while taking the safety functions into consideration.

It is desirable for one robot to perform multiple different tasks in order to promote automation of manufacturing and other operations. However, if the safety function of the robot is standardized regardless of the various work scenes, it will be difficult to balance the improvement of safety and work efficiency. In this respect, the configuration shown in the present embodiment identifies the work scenes and changes the determination criterion for monitoring for each work scene. This can contribute to the improvement of both robot safety and work efficiency.

In order to improve the robot safety, it may be possible to sequentially change the safety functions each time the robot's operating states (such as positions, directions, speeds, etc.) changes. However, such a configuration increases the control load on the robot control system and often affects the original functions (i.e., robot drive control) of the robot control system. In this regard, considering the fact that the robot motion changes with each task, it is recommended to switch the determination criteria for each work scene (or work situation), as explained in the present embodiment. This has a clear technical significance in that it can improve safety while minimizing the impact on the original functions of the robot control system.

Work scenes are identified based on the scene-related information included in the operation program. This allows the robot control system to select a determination criterion for each work scene by its own quick judgment. This prevents a large time waiting for switching the safety functions, which contributes to improved work efficiency.

In addition, since the determination criterion can be switched over, it is desirable to improve the robot's workability while taking robot safety into consideration. However, if such switching function is provided, the following new concerns may arise. That is, the switching of determination criterion may suddenly occur during a single robot's operation due to accidental reasons. In such a sudden case, a robot's motion that would not normally pose a problem may be monitored. This unnecessarily increases the number of times the robot has to make emergency stops, etc., and reduces work efficiency. Therefore, as explained in the present embodiment, the switching of the determination criterion according to the work scenes is not allowed until one of the currently executed tasks is completed. This suppresses the occurrence of the above event, thereby realizing a practically preferable configuration.

Determination criterion of operation monitoring parameters indicating the positions of the end effector can also be switched over, together with the determination criterion of the operation monitoring parameters indicating the force and speed of the end effector. This prevents the monitoring of the robot's force and speed from becoming overly severe. This is desirable to improve the robot's work efficiency.

### <3. Second embodiment>

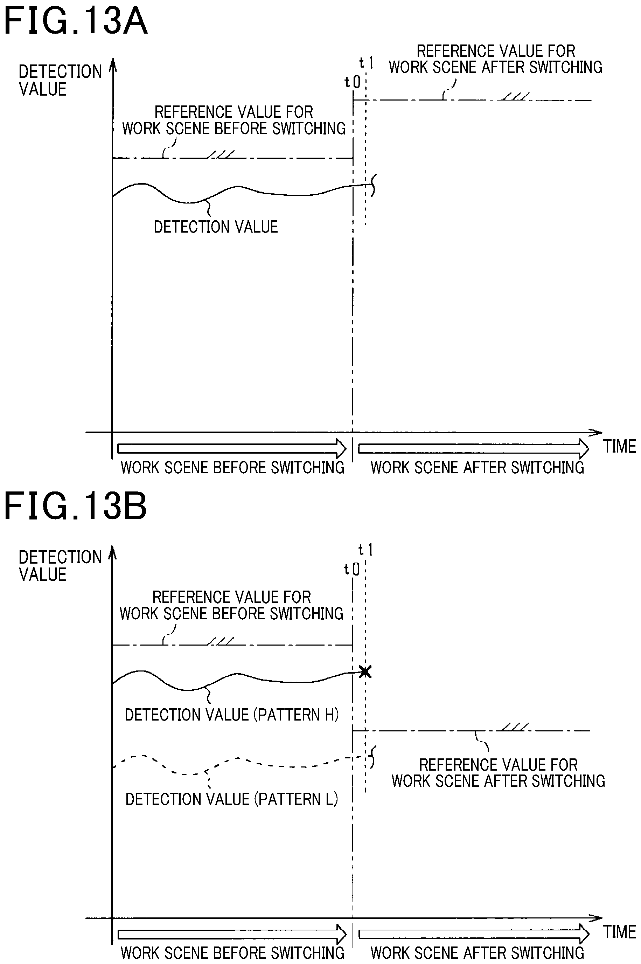

In the robot control system CS shown in the foregoing first embodiment, work efficiency and safety of the robot 20 are improved by changing the safety functions according to the work scenes. In the present embodiment, one of the features of this system is that it is designed to smoothly transition the work scenes when changing the safety functions. The following is a description of the events focused on with reference to Fig. 13.

The changes in the determination criterion (i.e., reference values) provided when a changeover of work scenes occurs can be broadly classified into the following two patterns. In other words, there are two main types of patterns: one in which the reference value is raised by switching the work scenes, as shown in Fig. 13A, and the other in which the reference value is lowered by switching the work scenes, as shown in Fig. 13B. In the following explanation, the example is given for the force of the end effector of robot 20, but the same event also occurs for the speed of the end effector.

In the example shown in Fig. 13A, the force (detection value) of the end effector of robot 20 is changed to be lower than a reference value in the work scene before switching. At the timing of t0, when the switching of the work scene occurs, the reference value is raised, and the difference between the detection value and the reference value becomes larger. In other words, even if the reference value is raised in accordance with the switching of the work scenes, the detection value remains below the reference value. Although the above-mentioned output limitation is relaxed by switching the work scenes and the force and speed of the end effector of robot 20 can increase, the detection value does not jump instantly due to the work schedule or delay in rotation of the motors provided in the robot 20. Therefore, immediately after the work scene switching, specifically at the timing of t1, which is the first monitoring cycle (sampling cycle) after switching of the work scenes, the detection value remains below a newly set reference value. In other words, an event such as an emergency stop of the robot 20 due to the detection value exceeding the reference value at the time of switching of the work scenes has not occurred.

In contrast, in the example shown in Fig. 13B, the force (detection value) of the end effector of robot 20 becomes lower than the reference value set in the work scene provided before the switching. In this respect, the situation is the same as that of the example shown in Fig. 13A. However, in the example of Fig. 13A, the reference value is raised at the timing of t0 when the work scene is switched over (so the determination becomes less strict).

On the other hand, in the case of Fig. 13B, the reference value is lowered at the timing of t0 when the switching of the work scenes occurs (, so the determination becomes strict). As shown by a pattern L in Fig. 13B, the detection value may remain below both reference values given before and after the switching performed in a period up to the timing of t0. In this case, the detection value does not exceed the reference values provided after the switching performed at the timing of t0 and at the timing of t1 coming immediately after the timing t0.

On the other hand, in the case of a pattern H shown in Fig. 13B, the detection value changes between the pre-switching reference value and the post-switching reference value in the period up to the timing of t0. Hence, at the timings of t0 and t1 following immediately after the timing t0, the detection value will exceed the reference value given after the switching.

Even if the above-mentioned output limits, etc. subsequently become harder due to a switchover between the work scenes, it does not necessarily mean that the detection value immediately falls below the reference value given atter the switching. When there is an occurrence of such an event causing an emergency stop of the robot 20, i.e. an emergency stop at a timing that is not normally necessary, may hinder the reliability of the robot 20 and the improvement of work efficiency (production efficiency) of the robot 20.

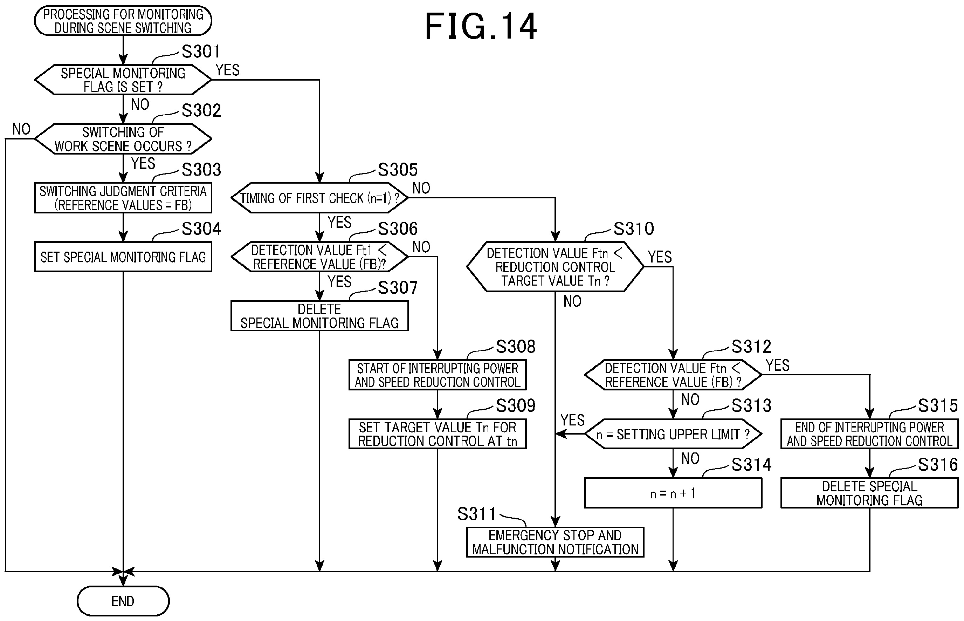

In the present embodiment, the configuration for switching the work scenes has been devised in consideration of these circumstances. The flowchart in Fig. 14 describes this innovation, specifically the process for monitoring during scene switching, which is performed by the monitoring control unit 52 as part of the operation monitoring process (as a periodic process). For convenience, the time scale of the part of the working scene immediately after switching and the time scale of the part where detection values normally exceed the reference value are described in Fig. 14 in a manner that is larger than the time scale of other parts of the work scenes.

In the process for monitoring during scene switching, the monitoring control unit 52 first determines in step S301 whether a special monitoring flag is set in a flag storage area of the memory. If the special monitoring flag is not set, the monitoring control unit 52 makes a negative judgement in step S301 and proceeds to step S302. In step S302, the monitoring control unit 52 determines whether a changeover between the work scenes has occurred. Specifically, the monitoring control unit 52 determines whether a command to switch the safety function has been received from non-safety-related unit Y. If the switching of the work scenes has not occurred, the monitoring control unit 52 terminates this monitoring process. If it is determined that a changeover between work scenes has occurred, the monitoring control unit 52 proceeds to step S303. In step S303, the monitoring control unit 52 switches the determination criterion. Specifically, the monitoring control unit 52 switches the reference value referred to the operation determination, to a reference value corresponding to the new work scene. In the subsequent step S304, the monitoring control unit 52 sets the special monitoring flag in the flag storage area of the memory and terminates this monitoring process.

For convenience, the work scene provided before the switching is referred to as "work scene A" and a reference value corresponding to work scene A is referred to as "reference value FA", while the work scene provided after the switching is referred to as "work scene B" and a reference value corresponding to work scene B is referred to as "reference value FB".

The description will now be back to step S301. If the special monitoring flag is set, the monitoring control unit 52 switches the work scene from the work scene A to the work scene B in step S305. The monitoring control unit 52 then determines whether it is time to first check a motion of the robot 20 (precisely, a motion of the end effector). Specifically, a counter is provided in the memory to keep track of the number of times this monitoring process has been executed after work scene switching. The value n of this counter changes from 0 to 1 when the special monitoring flag is set, and thereafter is added by 1 each time the main monitoring process is executed, while the value n is cleared to 0 when the special monitoring flag is deleted. In step S305, the monitoring control unit 52 refers to the value n of this counter to determine whether it is the timing for the first confirmation.

The monitoring control unit 52 proceeds to step S306 if a positive decision is made in step S305. In step S306, the monitoring control unit 52 determines whether the current detection value Ft1 is below the reference value FB used after the switching. If the detection value Ft1 is below the reference value FB, the monitoring control unit 52 clears the above-mentioned special monitoring flag in step S307 and terminates this process for monitoring. If the detection value Ft1 reaches the reference value FB, the monitoring control unit 52 makes a negative decision in step S306 and proceeds to step S308 to start interrupting reduction control, i.e., reduction control based on interrupt method, for the force and speed of the robot.

In the process of step S308, the monitoring control unit 52 intervenes in the drive control of the drive motor 45 to suppress the motions of the end effector of the robot 20. Specifically, the monitoring control unit 52 limits the power, etc. supplied to the drive motor 45 to a certain degree. This interrupting reduction control, i.e., interrupt-based reduction control, are repeated and continued until the monitoring cycle reaches an upper limit of n times (i.e., until a predetermined period of time has elapsed). The degree of limitation and the upper limit number of times may be calculated based on the reference value FA and reference value FB when executing the process of step S308, or may be read from a pre-registered program bank or the like. Incidentally, the robot 20 is not stopped in the interrupting reduction control.

The detection value is forcibly reduced by initiating the interrupting reduction control in step S308. In the subsequent step S309, the monitoring control unit 52 sets a reduction control target value Tn (i.e., an intermediate target value Tn or a target value Tn) for the detection value Ftn in each monitoring cycle presented after the interrupting reduction control are initiated. Specifically, a reduction rate set by reduction control in step S308 is specified to be constant, and the reduction control target value Tn is set based on the set reduction rate and the foregoing detection value Ft1.

The description of the process is returned to step S305. If the monitoring control unit 52 determines that it is not the first confirmation timing, i.e., it is the second or later timing, the process is made to proceed to step S310. In step S310, the monitoring control unit 52 determines whether the current detection value Ftn is below the current reduction control target value Tn which has been set in step S309. If the current detection value Ftn is not below the reduction control target value Tn, there is a probability that an unexpected motion (resulting in a malfunction) has occurred in the robot 20. Therefore, the monitoring control unit 52 performs each process for an emergency stop and for a malfunction notification in step S311, and then terminates this monitoring process. In the process for the emergency stop, the monitoring control unit 52 brings the robot 20 to an emergency stop by forcibly shutting off the power supply to the motors 35 and 45. Furthermore, the monitoring control unit 52 lights the warning lamps on the robot 20 in the process for malfunction notification and transmits information about the occurrence of a malfunction or other defects to the management system of the factory 10.

The description will now be returned to step S310. If the current detection value Ftn is below the reduction control target value Tn, the monitoring control unit 52 makes an affirmative decision at step S310 and proceeds to step S312. In step S312, the monitoring control unit 52 further determines whether the current detection value Ftn is below the reference value FB which is a reference value provided after the switching. If a negative decision is made in step S312, the monitoring control unit 52 proceeds to step S313. In this step, the monitoring control unit 52 determines whether in the period up to the current monitoring cycle, i.e. the period after switching of the working stage, the number of times this monitoring process has been executed has reached the upper limit which is set in step S309. If it is determined that the upper limit count has been reached, the monitoring control unit 52 proceeds to step S311. Normally, the reduction control is performed based on the interruption method such that the detection value falls below the reference value before the upper limit is reached. However, if the detection value is not yet controlled so that it falls below the reference value even after the upper limit has been reached, it is assumed that an unexpected motion (malfunction) may be occurring in the motions of the robot 20. Therefore, at step S311, the monitoring control unit 52 performs an emergency stop of the robot 20 and a malfunction notification, and then terminates this monitoring process. If it is determined in step S313 that the maximum number of times has not yet been reached, the monitoring control unit 52 adds 1 to the foregoing counter value n in step S314 and terminates this monitoring process.

Returning to the explanation of step S312, if a positive decision is made in the step S312, i.e. the detection value Ftn is below the reference value FB after the switching, the monitoring control unit 52 proceeds to step S315. In step S315, the monitoring control unit 52 terminates the foregoing interruptions on the reduction control. This means that the forced reduction of the detection value is cancelled. Thereafter, in step S316, the monitoring control unit 52 clears the special monitoring flag and terminates this process for monitoring.

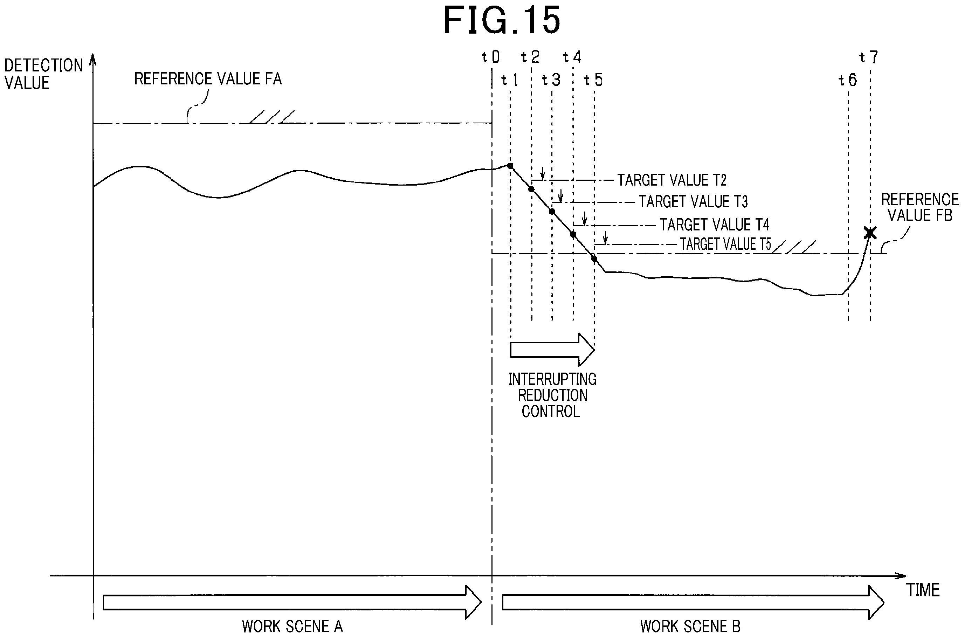

A supplementary explanation of the changes in detection values associated with the switching of the work scenes from the work scene A to the work scene B will then be provided with reference to the timing chart illustrated in Fig. 15.

At the timing of t0 when the switching is made from the work scene A to the work scene B, a detection value (provided as the detection value Ft0) is located between the reference value FA and the reference value FB. At the timing of t1 immediately after the work scene switching, i.e. at the timing of t1 in the next cycle after the timing of t0, the detection value Ft1 remains above the reference value FB. Normally, an emergency stop and malfunction notification would be performed at this timing, but the emergency stop and malfunction notification based on this detection value are avoided. At this timing of t1, interruption control for the reduction control are initiated to forcibly lower the detection value.

In each of the subsequent cycles (refer to timings t2 to t4), the detection values Ft2 to Ft4 are each below the reduction control target value T2 to T4, and the detection value is reduced as controlled. Then, at the timing of t5, the reference value FB is below the reference value FB as controlled before the cycle reaches the upper limit number of cycles. This means that the interrupting reduction control have been terminated. If the detection value is not reduced as intended at the timing of t2 to t5, an emergency stop and malfunction notification is performed at any one of the respective timings.

After the timing of t5 when the reduction control interrupts have been terminated, the actual detection value also basically changes in a range below the reference value FB. Then, as shown in the timings of t6 to t7, when the detection value changes so as to reach the reference value FB, an emergency stop and malfunction notification are performed.

According to the configuration described in detail, even when the safety functions are changed in accordance with the switching of the work scenes, the chances of the robot 20 being brought to an emergency stop (i.e., erroneous stop) due to such change can be reduced. In this way, the suppression of erroneous stops of the robot 20 is desirable for improving the production efficiency and other various production factors of the robot 20.

The configuration shown in the present embodiment can be applied to a configuration in which the distance to a person is detected using a laser scanner 37 or the like, and the work scenes of the robot 20 (e.g. a collaboration scene with a person) is switched according to detection results of the distance to a person. Specifically, it is possible to configure a reference value given when the distance between the robot 20 and a person is relatively close (a reference value corresponding to a short distance) to be lower than a reference value given when the distance is relatively far (a reference value corresponding to a long distance). This is expected to further enhance the safety which should be provided between the robot and person. However, as the distance to a person can change suddenly, the foregoing erroneous stop can have a noticeable impact on productivity, etc., due to an increase in events of the foregoing erroneous stop which may occur when the reference value changes from high to low. In this respect, if the configuration shown in the present embodiment is applied, even if the work scene is suddenly switched from a work scene corresponding to a long distance to a work scene corresponding to a short distance, erroneous stops or other unexpected events of the robot 20 can be reduced.

### <4. Third embodiment>

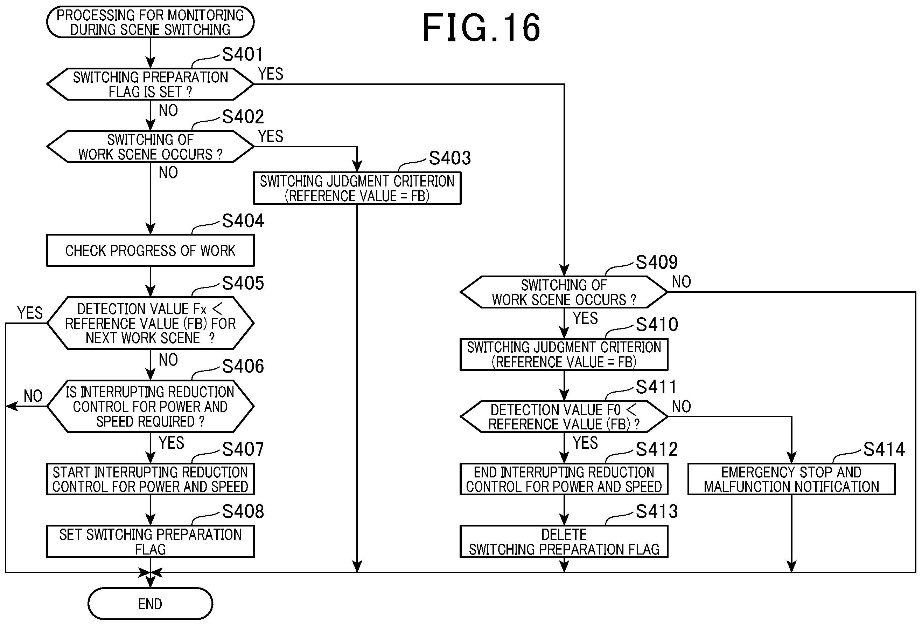

In the foregoing second embodiment, the configuration is such that the interrupting reduction control are initiated by responding, as a trigger, to switching of the work scenes. The present embodiment differs from the second embodiment in the configuration relating to the reduction control interrupts. The flowchart in Fig. 16 below describes monitoring processing in scene switching adopted by the present embodiment, which focuses on the differences from the second embodiment.

In the process for monitoring during scene switching in the present embodiment, the monitoring control unit 52 first determines in step S401 whether the switching preparation flag is set in the memory. If the switching preparation flag is not set, the monitoring control unit 52 makes its process proceed to step S402. If it is determined in step S402 that switching of the work scenes has occurred, the monitoring control unit 52 switches over the determination criterion in step S403 (specifically, switching from the reference value FA to the concern value FB) and then terminates the monitoring process.

If no work scene switching has occurred, the monitoring control unit 52 proceeds to step S404. In step S404, the monitoring control unit 52 ascertains the current work progress. In the subsequent step S405, the monitoring control unit 52 determines whether the detection value Fx at the present time is below the reference value (reference value FB) for the next scheduled work scene (work scene B). If the detection value Fx is below the reference value FB, the monitoring control unit 52 ends this monitoring process monitoring with no other processes executed. If the detection value Fx reaches the reference value FB, the monitoring control unit 52 proceeds to step S406.

In step S406, the monitoring control unit 52 determines, based on the difference between the current detection value Fx and the reference value FB and the remaining time (e.g. estimated time) until the next scheduled work scene, whether it is the right time to start interrupting reduction control for the force and speed. In other words, the monitoring control unit 52 determines whether the timing is appropriate for lowering detection values which are less than the reference value FB within the remaining time. If a negative decision is made in step S406, the monitoring control unit 52 terminates the monitoring process with no other processes executed, because it can be estimated that there is still time remaining until start of the interrupts, when considering the detection value at present, etc. If the monitoring control unit 52 judges that the timing is appropriate in step S406, the monitoring control unit 52 starts interrupting reduction control, in step S408. In this reduction control interrupts, the monitoring control unit 52 intervenes in the drive control of the drive motor 45 to suppress the motions of the end effector of the robot 20. Specifically, the monitoring control unit 52 limits the power, etc. supplied to the drive motor 45 to a certain extent.

In the present embodiment, the appropriate timing was set as "variable", but this can also be set as "fixed". For example, the appropriate timing can be configured such that when the remaining time reaches a predetermined time and, at the predetermined time, the detection value at that time exceeds the reference value FB, the interrupting reduction control are initiated.

Afterwards, in step S406, the monitoring control unit 52 sets a switching preparation flag in a flag storage area of the memory and ends this monitoring process.

The description will now return to step S401. If the monitoring control unit 52 determines that the switching preparation flag is set in the flag storage area of the memory, the unit 52 causes processing to proceed to step S409. In step S409, the monitoring control unit 52 determines whether switching of the work scene has occurred. If switching of the work scenes has occurred, the monitoring control unit 52 performs switching of the determination criterion in step S410, specifically changing from the reference value FA to the reference value FB. Thereafter, at step S411, the monitoring control unit 52 determines whether the current detection value Ft0 is below the reference value FB. As described above, in the present embodiment, the switching of the work scenes is detected in advance and the reduction control interrupts are executed for the switching. As a result, the detection value Ft0 is basically below the reference value FB at the timing when a switchover between the work scenes is executed.

If a positive decision is made in step S411, the monitoring control unit 52 terminates the reduction control interrupts in step S412, clears the switching preparation flag in step S413, and terminates this monitoring process.

In contrast, if a negative decision is made in step S411, the monitoring control unit 52 performs each of emergency stop and malfunction notification processes in step S414 and then terminates this monitoring process.

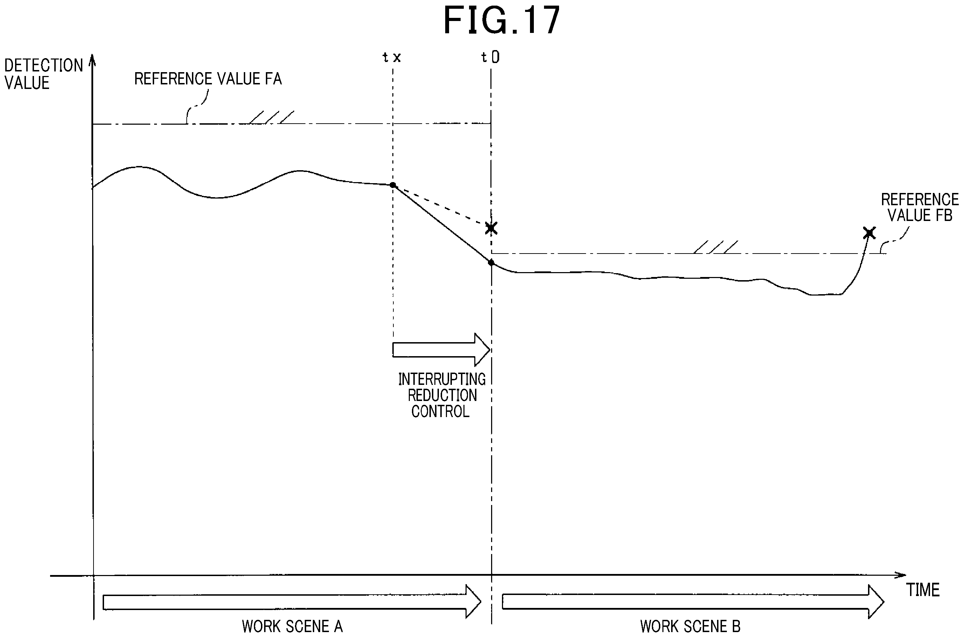

A timing chart in Fig. 17 provides a supplementary explanation of changes in the detection values when the work scene is switched from a work scene A to a work scene B.

At the timing of tx which is before the timing of t0 at which the work scenes will be changed from the work scene A to the work scene B, the detection value (detection value Fx) is between the reference value FA corresponding to the current work scene A and the reference value FB corresponding to the next work scene B. At the timing of tx, the monitoring control unit 52 pre-specifies the next work scene B and a remaining period of time left until the next work scene B. Furthermore, the monitoring control unit 52 determines that the timing tx is an appropriate timing for starting interrupting reduction control, based on the current detection value, the reference value FB corresponding to the next work scene B, and the remaining period of time left until the timing of t0. Therefore, at this timing tx, the interrupting reduction control are initiated.

At the timing t0 at which switching is made from the work scene A to the work scene B, the reference value switches from the reference value FA to a reference value FB and it is determined whether the current detection value is below the reference value FB. If the detection value is reduced as expected by the above reduction control interrupts, the detection value falls below the reference value FB at the timing of t0, resulting in that an emergency stop, etc. of the robot 20 will not be activated. On the other hand, if the detection value is not lowered as expected for some reason and the detection value reaches the reference value FB at the timing t0, an emergency stop, etc. of the robot 20 is activated.

As described in detail, a reduction control period (i.e., a buffer period) is set before the work scene switching. This reduces the occurrence of events of the robot 20 being brought to an emergency stop (i.e., an erroneous stop) which may be caused due to the changes, even when the safety functions str changed in accordance with the work scene switching. In this way, the suppression of erroneous stops of the robot 20 is desirable for improving the production efficiency and/or other factors related to the production in a site where the robot 20 is used for the production.

### <5. Fifth embodiment>

A robot 20 shown in the present embodiment differs from that of the first embodiment in that the robot 20 employs the following additional configurations. Specifically, in the robot 20 shown in the present embodiment, a distance to a person is estimated using a laser scanner 37. Depending on the estimated distance from the person, the work scenes of the robot 20 (including a palletizing provided by the scene SN5, which does not assume human collaboration) can be switched between a work scene that does not assume the presence of a person (hereinafter referred to as a work scene 1) and a work scene in which human presence is assumed (hereinafter referred to as a work scene 2). In parallel with this switchover, the safety functions (i.e., determination criterion) is changed to be different from each other in both work scenes. These configurations for estimating the distance to the person, switching the work scenes and changing the safety functions differ from the configuration described in the foregoing first embodiment. In view of the fact that the determination criteria (a reference value F1) for the work scene 1 is lower than the determination criteria (a reference value F2) for the work scene 2, it is understood that the work scene 2 has higher safety considerations than that for the work scene 1.

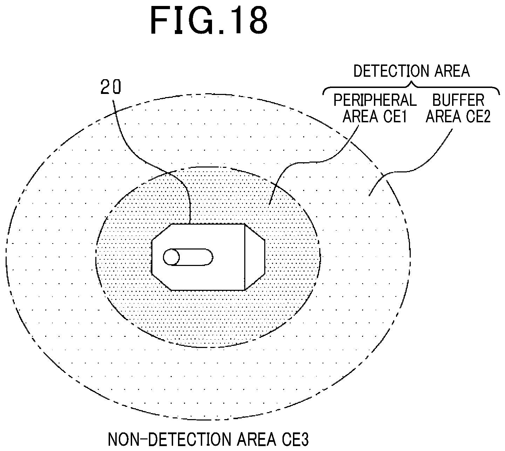

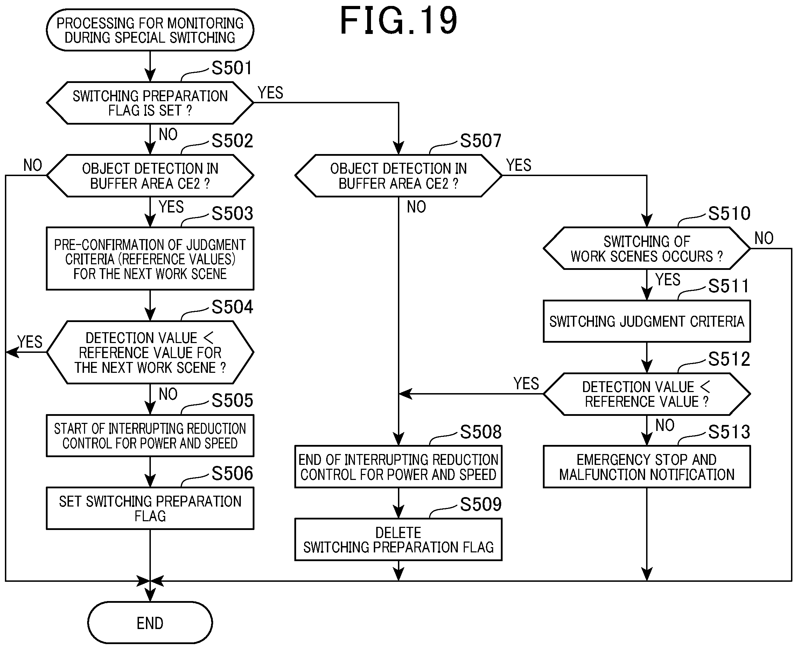

As shown in Fig. 18, a detection area (i.e. a monitoring area) monitored by the laser scanner 37 includes a peripheral area CE1 that is immediately and closely set to the robot 20, a non-detection area CE3 that is outside the monitoring performed by the laser scanner 37, and a buffer area CE2 that is set between the peripheral area CE1 and the non-detection area CE3. In the situation where the robot 20 is working in a collection area E3, the work scene is provided as the work scene 1 which does not assume a person as being presented therein, as described. Therefore, when a person approaching the robot 20 enters the peripheral area CE1 (in other words, when a person is detected in the peripheral area CE1), the work scene switches the work scene 1 to the work scene 2. In the present embodiment, the technical concept described in the above-mentioned third embodiment is applied to such a sudden switching. In other words, by preparing in advance for the work scene switchover, safety and production efficiency (work efficiency) are improved. With reference to the flowchart shown in Fig. 19, the configuration related to such advance preparation, specifically a process for monitoring special switching, which is executed as part of the operation monitoring process performed by the monitoring control unit 52, will now be described below.

In the process for monitoring for the special switching, the monitoring control unit 52 first determines whether the switching preparation flag is set in the memory at step S501. If the switching preparation flag is not set, the monitoring control unit 52 proceeds to step S502. In step S502, the monitoring control unit 52 determines whether an object (and/or a person(s)) is detected in the buffer area CE2 based on information from the laser scanner 37. If a negative decision is made in step S502, the monitoring control unit 52 ends this process for monitoring without processing any steps. In contrast, if a positive decision is made in step S502, the monitoring control unit 52 proceeds to step S503 to pre-confirm a determination criteria (i.e., a reference value) used in the next work scene. Specifically, if a person intrudes into the buffer area CE2, there is a probability that the person may intrude directly into the peripheral area CE1. If a person intruding into the peripheral area CE1 is confirmed, the work scene switches from the work scene 1 to the work scene 2 above. Therefore, in step S503, the monitoring control unit 52 confirms in advance the reference value F2 in preparation for a case where the work scene 2 actually occurs.

In the subsequent step S504, the monitoring control unit 52 determines whether the current detection value Fx is below the reference value F2 of the work scene 2, which is assumed to be switched to the next. If the detection value Fx is still below the reference value F2, the monitoring control unit 52 ends this monitoring process without performing any other steps. However, if the detection value Fx reaches the reference value F2, the monitoring control unit 52 proceeds to step S505.

In step S505, the monitoring control unit 52 initiates interruption on a force and speed reduction control. In the interrupting reduction control, the monitoring control unit 52 intervenes in the drive control of the drive motor 45 to suppress the motions of the end effector of the robot 20. Concretely, the monitoring control unit 52 limits the power, etc. supplied to the drive motor 45 to a certain extent in a controlled manner. Afterwards, the monitoring control unit 52 sets a switching preparation flag in the flag storage area of the memory in step S506, and ends this monitoring process.

The description is returned to step S501. If it is determined that the switching preparation flag is set in the flag storage area of the memory, the monitoring control unit 52 proceeds to step S507. In step S507, the monitoring control unit 52 determines whether an object (and/or person(s)) is detected in the buffer area CE2. If a negative decision is made in step S507, i.e. no more objects (and/or person(s)) are detected in the buffer area CE2, the monitoring control unit 52 proceeds to step S508 to terminate the interrupt control with the reduction control. The monitoring control unit 52 then clears the switching preparation flag which has been set in step S509 and terminates this monitoring process.

On the other hand, if an affirmative decision is made in step S507, the monitoring control unit 52 proceeds to step S510. If an object (and/or a person) is detected in the peripheral area CE1, an affirmative decision is also made in step S507, thereby making the processing of the monitoring control unit 52 proceed to step S510.

In step S510, the monitoring control unit 52 determines whether a switchover from the work scene 1 to the work scene 2 has been caused. Specifically, the monitoring control unit 52 determines whether an object (and/or a person) is detected in the peripheral area CE1. If a switchover to the work scene 2 has caused, the monitoring control unit 52 switches the determination criteria in step S511, specifically switching from the reference value F1 to the reference value F2. Afterwards, the monitoring control unit 52 determines in step S512 whether the current detection value Ft0 is below the reference value F2. As understood from the foregoing, in the present embodiment, the switchover of the work scenes is predicted and the interrupt control with the reduction control is executed so as to target the switchover to the next work scene. As a result, the detection value Ft0 is basically lower than the reference value F2 at the timing when the work scene switchover is executed.

If a positive decision is made in step S512, the monitoring control unit 52 terminates the interrupt control with the reduction control in step S508, clears the switching preparation flag in step S509, and terminates this monitoring process.

Meanwhile, if a negative decision is made in step S512, the monitoring control unit 52 performs each of the emergency stop and malfunction notification processes in step S513, and then terminates this monitoring process.

As described in detail above, a period of time for the reduction control continued to the work scene switching is provided before switching from the work scene 1 to the work scene 2. Even when the safety functions are changed in accordance with the work scene switching, the period of time for the reduction control reduces the events occurring in the robot 20, which brings the robot into an emergency stop (i.e., a kind of erroneous stop) due to the switchover between the work scenes. In this way, the suppression of erroneous stops of the robot 20 is desirable for improving the production efficiency of the robot 20 and other factors associated with production.

In the present embodiment, as described, an example is given of a case in which the functions related to switching between the work scene 1 and the work scene 2 are applied to the scene SN5 which is non-collaborative with people. However, the application to the scene switching is not limited to such an example. It is also possible to apply the switching function to a case the switching is performed between the work scene 1 and the work scene 2 to other work scenes that are collaborative with people.

### <6. Other embodiments>

The foregoing embodiments may be implemented as follows, for example, without being limited to the contents described in each of the embodiments described above. Incidentally, each of the following configurations may be applied to each of the foregoing embodiments individually, or may be applied to each of the foregoing embodiments in part or in whole in combination. It is also possible to arbitrarily combine all or some of the various configurations shown in each of the foregoing embodiments. In this case, it is preferable that the technical significance (effect to be demonstrated) of each configuration subject to combination is ensured. It is possible to apply each of the following configurations individually to a new configuration comprising a combination of two or more of the embodiments, or to combine some or all of them.

In each of the foregoing embodiments, the work scenes (the scene SN1 to SN9) of the robot 20 is determined and the determination criterion of the operation monitoring parameters (for the force, speed and position) is switched according to the determined work scene. This configuration may be modified as follows. Namely, in a configuration where the type of work of the robot 20 differs for each area in which the robot 20 moves, the drive control unit 51 identifies the area in which the robot 20 is located, and the safety-related unit X switches the determination criterion of the operation monitoring parameters according to the identified area. Thus, the work area is identified instead of monitoring the work scenes, where the identified work area still serves as the work situation of the robot. In this case, the drive control unit 51 can function as an area identification unit.

Alternative configuration is possible such that, when multiple tasks are performed in each area in which the robot 20 moves or when the same task is performed in multiple areas, the drive control unit 51 identifies both the work scenes of the robot 20 and the areas in each of which the robot 20 is located, and the safety-related unit X switches the determination criterion of the operation monitoring parameters accordingly.

In a configuration where the robot 20 performs multiple tasks (work routines) according to a predetermined time schedule, the drive control unit 51 can be configured to manage the progress of the work routine according to the time elapsed from the start of the routine or the current time, and the safety-related unit X switches the determination criterion of the operation monitoring parameters based on the elapsed time or current time.

It is also possible to configure the safety-related unit X to switch the determination criterion of the operation monitoring parameters based on the elapsed time or current time and information indicating a delay time, taking into account when delays occur in the schedule.

In this way, the elapsed time or current time is determined instead of the work scene, as a factor indicating the work situation. In this case, the drive control unit 51 can function as a determining unit.

In addition to the configuration in which the determination criteria are switched according to a work scene of the robot 20, it is also possible to have an additional configuration in which that safety-related unit X switches the determination criterion according to the elapsed time or current time. For example, it is often the case that breaks (e.g. lunch breaks) are provided in fixed periods in the factory 10, and it is assumed that the number of people in the aisle E4, etc. is likely to increase during such fixed periods. In consideration of such a situation, the determination criterion which are set when the robot 20 passes through the aisle E4 during break times should be stricter than the determination criterion which are set when the robot 20 passes through the aisles E4 during times other than the break times.

In each of the foregoing embodiments, the three operation monitoring parameters composed of the force, speed and position of the robot are used together in any work scene, but the type and number of operation monitoring parameters to be as determination criterion may be changed according to work scenes. For example, in the first scene, the force and speed of the robot are employed as operation monitoring parameters, while in the second scene, the force, speed and position of the robot can be used as operation monitoring parameters.

The work scenes shown in the foregoing embodiments may be subdivided according to the type of operation carried out by the robot 20. In such a case, the safety-related unit X can also switch the determination criterion of the operation monitoring parameters for each of such subdivided work scenes. For example, in the picking of scene SN3, the scene where the workpiece is taken out from the processing machine 14 and the scene where the workpiece is transferred to the neighboring processing machine can be configured to switch the determination criterion as separate scenes. Furthermore, the safety-related unit X may be configured to switch the determination criterion between the first half of the workpiece removal scene (until the workpiece is grasped) and in the second half (until the workpiece is transferred to the container 18).

It is also possible to subdivide one work scene into scenes where the distance to a person is assumed to be relatively close and scenes where the distance to a person is assumed to be relatively far. For each of these subdivided scenes, the safety-related unit X can be configured to switch the determination criterion depending on the subdivided work scenes.

In each of the foregoing embodiments, the safety-related unit X is configured to switch the determination criterion of the operation monitoring parameters at the timing when the work scenes transit from the current work scene to the next work scene. Alternatively, this may be changed to a configuration where the determination criterion of the operation monitoring parameters are switched at the end of the previous work scene. It is also possible to switch the operation monitoring parameters at the beginning of the next work scene.

It is optional whether the operation of the robot 20 is allowed to continue during the switchover between the determination criteria. When switching the determination criterion of the operation monitoring parameters, the robot 20 may be temporarily stopped until the switching is completed. It is also possible to have the robot 20 stop temporarily when being switched to stricter determination criterion in the safety level, while the robot 20 continues to operate when being switched to looser determination criterion in the safety level.

In each of the foregoing embodiments, the CRC is added to serve as diagnostic information for diagnosing whether the transmission and reception of the command and information between the non-safety-related unit Y and the safety-related unit X is normal. The setting of this CRC is arbitrary and does not necessarily have to be based on the command ID and data of the request command.

In the palletizing shown in the scene SN5 in the foregoing embodiments, values exceeding the limits of capabilities of the force, speed and position of the robot 20, i.e. values that practically cannot be generated, were set as the determination criterion for the operation monitoring parameters. Meanwhile, alternatively, in the palletizing scene SN5, the operation monitoring may be skipped. In other words, in the specified work scene, the operation monitoring function of the robot 20 may be switched off.

In each of the foregoing embodiments, the configuration is set such that switching the determination criterion of the operation monitoring parameters and switching the limits of force, speed and position (in the motion area) are executed according to the work scenes of the robot 20, but this is not limited to this. It is sufficient if at least the switching of the determination criterion of the operation monitoring parameters are performed. In other words, switching the limits can be omitted.

In each of the foregoing embodiments, the mobile type of robot 20 is illustrated, but the technical ideas shown in the foregoing embodiments may be applied to a robot control system for a stationary type robot. For example, in a configuration where a stationary robot executes multiple types of work depending on the type of work supplied by a conveyor, etc., the work scenes can be determined and the determination criterion for the operation monitoring parameters can be switched over among the work scenes. The work scene may also be subdivided as described above and the determination criteria may be switched for each subdivided scene.

The switching of the determination criterion for the operation monitoring parameters, as shown in the above embodiments, is desirable to improve the workability of the robot 20 while, at the same time, taking the safety of the robot 20 into consideration. However, if such a switching function is provided, the following new concerns arise. That is, if switching the determination criterion suddenly occurs during a task process due to accidental reasons, etc., an event may occur in which a normally problem-free motion is caught by the monitoring. This can unnecessarily increase the times of emergency stops, etc. of the robot 20 and reduce the work efficiency. In view of these circumstances, it is technically possible to disallow (prohibit) switching of the determination criterion until the completion of the first task being executed.

The objects being delivered differ between 'delivery A' in scene SN4 and 'delivery B' in scene SN8. Considering the difference in the conditions of the delivered object (e.g. weight), the safety function in the "delivery A" (determination criterion of the operation monitoring parameters) and the safety function in the "delivery B" (determination criterion of the operation monitoring parameters) may be set to be different from each other.

In each of the foregoing embodiments, the request commands issued from the respective non-safety-related units Y (control devices) are designed such that the numbers each specifying a specific work scene (scene number = 1 to 9) are shared by the units, but this is not limited to such a number sharing configuration. It can also be configured such that, in place of the above number sharing, the scene numbers are individually set depending on which non-safety-related unit Y issues a request command. For example, in a request command where the control device = teaching command, the scene numbers are assigned to 1-9; in a request command where the control device = pack script, the scene numbers are assigned to 11-19; in a request command where the control device = IO, the scene numbers are assigned to 21-29, respectively.

In each of the foregoing embodiments, the determination criterion for the operation monitoring parameters are stored in the safety-related unit X in advance and are associated with the scene numbers, and the non-safety-related unit Y specifies a determination criteria from the scene numbers, which is specified by the non-safety-related unit Y. However, this is not only a limited example. Alternatively, the non-safety-related unit Y may be configured to send information indicating each determination criteria individually to the safety-related unit X, instead of using the scene number assigned to the work scene.

Instead of a configuration in which the determination criteria are stored in advance in the safety-related unit X, it is also possible to provide a configuration in which a value each indicating the determination criteria is sent from the non-safety-related unit Y to the safety-related unit X.

The foregoing embodiments illustrate the case where the robot 20 is applied to the processing line in the factory 10, but the application of the robot 20 is not limited to such processing lines. It is also possible to apply the robot 20 to assembly lines, inspection lines and packaging lines. The range of motions of the robot 20 is not limited to one line, but can be configured to move over multiple lines, for example, to engage in individual tasks on each line.

In each of the foregoing embodiments, examples are given in which the first, second and other diagnostic information is a CRC, but the diagnostic information is not limited to this example. For example, the diagnostic information may include error detection codes other than CRCs. The error detection coding methods are not limited to a particular method, while the methods may be, for example, error correction methods including parity codes, checksums, block codes such as cyclic codes, error detection on hashes, block codes, or convolutional codes. The diagnostic information may also include information on the location of the end effector of the robot 20.

### <7. Groups of inventions extracted from the foregoing embodiments>

The features of the groups of inventions extracted from the foregoing embodiments will now be described below, with effects, etc. indicated as necessary. In the following, for ease of understanding, the corresponding configurations provided in the foregoing embodiments are shown in brackets, etc. as appropriate, but is not limited to the specific configuration shown in these brackets, etc.

### <Feature A: Switching of safety functions commanded from non-safety-related unit>

The following feature group A is developed in view of the issue of making it possible to easily change the safety functions while improving the reliability of the robot's safety functions.

Feature A1:
A first feature A1 provide a robot control system, comprising a safety-related unit and a non-safety-related unit that realize a safety function of a robot during work thereof, wherein
the safety-related unit includes a motion judgment unit that judges a motion of the robot based on a safety-related input signal that includes a parameter correlated with at least one of a force, a speed, and a position of the robot which is in operation and a determination criteria for parameters stored in advance, the safety-related unit generating a safety-related output signal depending on a judged result of the motion judgment unit, thereby realizing the safety function,
the non-safety-related unit sends a group of information including instruction information and first diagnostic information to the safety-related unit to instruct the safety-related unit to switch the determination criteria, wherein the instruction information includes information indicating determination criteria to be referred during judgment performed by the motion judgment unit;
the safety-related unit diagnoses whether the instruction has been received normally based on the first diagnostic information and whether the instruction itself is normal based on the instruction information, when the non-safety-related unit receives said instruction from the non-safety-related unit; the safety-related unit accepts the command and switches the determination criterion to be referred during the judgment depending on the instruction information, when it is determined that the instruction has been received normally and said instruction itself is diagnosed as normal; and the safety-related unit notifies the non-safety-related unit of reception of the command which is sent from the non-safety-related unit;
the non-safety-related unit requests the safety-related unit for information for specifying the determination criteria that is set as a reference target by switching based on the command, when the non-safety-related unit is informed by the safety-related unit that the safety-related unit has accepted the command;
the safety-related unit responds to the request from the non-safety-related unit by sending a group of information consisting of the information for specification and a second diagnosis to the non-safety-related unit; and
the non-safety-related unit diagnoses, based on the second diagnostic information, whether the response has been received successfully and whether the actually-set determination criteria is consistent with the determination criteria specified by the command, when the non-safety-related unit receives the response from the safety-related unit.

When switching the safety functions (determination criteria), a command for switching is first issued from the non-safety-related unit to the safety-related unit. This command includes the instruction information and the first diagnostic information. The safety-related unit diagnoses whether the command has been received normally based on the first diagnostic information, and whether the command itself is normal based on the instruction information. If the diagnosis shows no malfunction, the safety-related unit switches determination criterion based on the command coming from the non-safety-related unit. In other words, even if the command is issued and come from the non-safety-related unit, the determination criteria are switched when it is judged that the received command has no malfunction which may be caused due to a transmission error or other factors.

In this way, safe switching responsively to a command from the non-safety-related unit can suitably improve the operability of changing the safety functions adopted by the robot control system. In other words, the safety functions in the safety-related unit are not changed unless the user has successfully accepted the command from the non-safety-related unit. This ensures the certainty of the safety control and allows the settings to be changed by operation from the non-safety-related unit. Therefore, user-friendly operational settings can be realized and the degree of freedom of setting the operating means can be increased.

Next, the safety-related unit informs the non-safety-related unit that the safety-related unit has accepted the command. The non-safety-related unit receives this notification and requests the safety-related unit for information which can specify determination information (that is, determination criteria after being switched over) that is currently being referred to. In response, the safety-related unit sends a group of information consisting of the information for specification and second diagnostic information to the non-safety-related unit. The non-safety-related unit diagnoses whether the response from the safety-related unit has been received successfully, based on the second diagnostic information, and also diagnoses whether the actually set determination criteria is consistent with a determination criterion specified by the initial command. In other words, the non-safety-related unit can check whether the switching of the safety functions in the safety-related unit has been successfully carried out as a result of own command.

Furthermore, according to the configuration of the first means, two round-trip communications are performed between the non-safety-related unit and the safety-related unit, with a switchover of the safety functions performed therebetween. Furthermore, each time one round-trip communication is performed, either the safety-related unit or non-safety-related unit uses the first or second diagnostic information to check whether normal communication has been performed. The normal communication indicates that the safety-related unit and the non-safety-related unit are likely to operate normally. Therefore, by confirming the normality of the communication twice, it is possible to confirm with higher probability that both of the safety-related unit and non-safety-related unit are operating normally. In addition, by the two round-trip communications between the non-safety-related unit and the safety-related unit with a switchover of the safety functions therebetween, it is shown that both of the non-safety-related unit and the safety-related unit are operating normally during the switchover of the safety functions.

According to the configuration shown in the present feature, even when the safety function in the safety-related unit is switched from the non-safety-related unit, the switch over can be handled appropriately. This appropriate handling prevents a decrease in the reliability of the safety function changes. Therefore, the restrictions on the input to change the safety function are not as restrictive as in the case where the input from input unit (so-called safety input) is used. This can suitably improve the operability of changing the safety functions.

Incidentally, by way of example, when one robot is engaged in various tasks, enabling the robot to change (operate) the safety functions according to the various tasks is advantageous in improving the robot's work efficiency while taking safety into consideration. The ability to switch the safety functions which is performed by the non-safety-related unit is also desirable to promote the application of the robot to multiple types of work and to promote factory automation.

The "force, speed and position of the robot" shown in this feature includes not only the force, speed and position at the tool center point of the robot, but also the force (rotational torque), speed (rotational speed) and position of each of the axes of the robot.

Feature A2 provides the robot control system according to the feature A1, wherein
the safety-related unit is equipped with a storage device storing therein types of the instruction information; and
the safety-related unit checks whether the instruction information for the diagnosis performed by the safety-related unit is included in the types of the instruction information stored in the storage device.

As shown in the present feature, it is meaningful to check the type of instructions stored in advance in the safety-related unit against the currently issued instructions. In other words, it is possible to diagnose whether the instructions from the non-safety-related unit are themselves normal. In such a case, if commands are corrupted due to a sticking bit or a communication error, etc., a state where the safety functions are switched based on the corrupted command can be suitably avoided.

Feature A3 provides the robot control system according to the feature A2, wherein
the non-safety-related unit is provided as a plurality of non-safety-related units;
the instruction information includes first information which is capable of specifying information sent from which of the non-safety-related units and second information for specifying a candidate of the determination criteria to be referenced;
the storage device stores therein a combination of the first information and the second information; and
the safety unit confirms whether the combination of the first information and the second information is stored in the storage device in the diagnosis.

When the instruction information is damaged due to bit sticking, communication errors, etc., it can be easily suppressed that the information is accidentally matched with the instruction information from other non-safety-related units. When the instruction information is constructed by combining the first and second information, it is unlikely that both pieces of information will be damaged at the same time. Therefore, it is less likely to cause the inconvenience of accidentally matching with other commands.

Feature A4 provides the robot control system according to any one of the features A1 to A3, wherein
the first diagnostic information is decided based on the instruction information, and
the safety-related unit diagnosis whether the command is sent normally by comparing the first diagnostic information with the instruction information.

According to the configuration shown in this feature, the first diagnostic information (value) is decided (changes) according to the instruction information. If at least one of the instruction information and the first diagnostic information is damaged, the relationship between them is broken, and it is possible to specify, via diagnosis, that a malfunction has occurred in the command. This configuration can suitably suppress incorrect switching by a command (with damage) from a non-safety-related unit.

When the first diagnostic information is added to the instruction information, the amount of information increases compared to the case of the instruction information alone. In other words, a series of the signals consisting of the instruction information and the first diagnostic information becomes longer, and the validity of the diagnostic result is improved because there is more information to be checked in the diagnosis of normality or abnormality. This dramatically improves the reliability of switching (changing) the safety functions depending on the input supplied from non-safety-related units.

Feature A5 provides the robot control system according to any one of the features A1 to A4, wherein the second diagnostic information differs depending on a determination criteria, among the plurality of determination criterion, to be referred during the judgment performed by the motion judgment unit.

The specification information sent to the safety-related unit in response to a response to the safety-related unit is accompanied by the second diagnostic information. This second diagnostic information depends (as variable values) on the determination criteria referred to by the motion judgment unit of the safety-related unit. In other words, the second diagnostic information can be used not only to check for communication anomalies, but also to check whether the specification information is normal or not. Therefore, the certainty of the response can be improved by a simple structure.

Feature A6 provides the robot control system according to any one of the features A1 to A5, wherein
the second diagnostic information is decided based on the information for specification; and
the non-safety-related unit diagnoses whether the response is sent normally by comparing the second diagnostic information with the information for specification.

According to the configuration shown in this feature, the second diagnostic information (values) is variably set (changes) according to the specification information. If at least one of the specification information and the second diagnostic information is damaged, the relationship between them is broken. In this case, it is possible to specify that a malfunction has occurred in the response by the diagnosis. This configuration can contribute to further improving the reliability of the robot control system.

When the second diagnostic information is added to the specification information, the amount of information increases compared to use of the specification information alone. In other words, a series of the signal consisting of the specification information and the second diagnostic information is longer, and there is more information to be checked in the diagnosis of normality or abnormality, thus improving the validity of the diagnostic results.

Feature A7 provides the robot control system according to any one of the features A1 to A6, wherein the second diagnostic information is formed to be inconsistent with the first diagnostic information.

According to the configuration shown in this feature, when switching the safety functions, the first and second diagnostic information are basically inconsistent with each other. However, if the first diagnostic information is sent back as the second diagnostic information due to accidental errors such as bit sticking, the first and second diagnostic information and the second diagnostic information become consistent with each other. This allows the above errors to be detected promptly.

Feature A8 provides the robot control system according to any one of the features A1 to A7, wherein
any of the instruction information and the information for specification includes information indicating the determination criteria, among the plurality of determination criterion, to be referred by the motion judgment unit and information indicating a sender of the instruction information and the information for specification; and
the first diagnostic information is decided based on the instruction information included in the command and the second diagnostic information is decided based on the information for specification included in the response.

The first diagnostic information included in the command issued from the non-safety-related unit and the second diagnostic information included in the response sent from the safety-related unit are determined based on the instruction information including information indicating a sender and the specification information. In other words, when switching the safety functions, the first and second diagnostic information are basically inconsistent with each other. However, if the first diagnostic information is sent back as the second diagnostic information due to accidental errors such as bit sticking, the first and second diagnostic information will be consistent with each other, resulting in prompt detection of the fact that the errors have been missed from being detected.

Feature A9 provides the robot control system according to any one of the features A1 to A8, wherein
the determination criteria include a force reference for parameters of the force and a speed reference for parameters of the speed, each of the force reference and the speed reference being regulated as a plurally of references,
the safety-related unit stores therein a combination information (i.e., scene numbers) indicating combinations of the power references and the speed references which are referred during judgment performed by the motion judgment unit, and
the instruction information is configured to be information (i.e., scene numbers) relevant to the combinations of the power references and the speed references.

As described in the feature A8, switching may be performed for multiple types of determination criterion (such as force references, speed references). In this case, instead of specifying each determination criteria individually, a predefined combination of these references can be specified. This specification manner reduces the complexity of the command handed from the non-safety-related unit to the safety-related unit. This is a favorable configuration for increasing the number of tasks that the robot can engage in, while still taking the safety function into account.

### <Group of features B: switching of safety functions for every work condition>

The Group of features B is made in view of the background conditions, problems, etc. faced when providing a robot control system that suitably improves the safety and work efficiency of the robot.

Feature B1: This feature B1 is related to a robot control system, comprising:
a safety-related unit for comprising a motion judgment unit that judges a motion of a robot based on a safety-related input signal that includes parameters correlated with at least one of a force, a speed, and a position of the robot which is in operation and determination criterion for the parameters stored in advance, and realizing a safety function of the robot by generating a safety-related output signal depending on a judged result of the motion judgment unit, thereby realizing the safety function;
a situation identifying unit for identifying a work condition of the robot which is in operation currently, from a plurality of work conditions which are set previously for work to be performed the robot; and
a determination criterion switching unit for switching the determination criterion for the parameters, which are referred by the motion judgment unit, to a determination criterion corresponding to the work condition identified by the situation identifying unit.

It is desirable for a single robot to perform several different kinds of tasks in order to promote automation of manufacturing and other operations. However, if the safety functions of the robot are designed to be uniform regardless of differences of the work scenes, it becomes difficult to balance the improvement of safety and the improvement of work efficiency. In this respect, in the configuration shown in this feature, the work scenes are identified for every work scene and the monitoring determination criterion are changed for each work condition. This can contribute to improving both the safety of the robot and the work efficiency.

In order to improve the safety of the robot, it is possible to configure the robot control system such that the safety functions are changed sequentially each time the robot's operating states (i.e., a robot position, direction, speed, etc.) are changed. However, in adopting such a configuration, the control load on the robot control system increases, whereby the original functions of the robot control system (robot drive control) are affected in their various performance factors. In this respect, in view of the fact that the movement of the robot changes with each work, the configuration in which the determination criterion are switched for each work scene, as shown in the present feature, which leads to a clear technical significance in that the robot can improve safety while reducing the influence on the original functions of the robot control system.

Feature B2 provides the robot control system according to feature B1, wherein
the work conditions are work scenes performed by the robot, and
the situation identifying unit is provided as a scene identifying unit adapted to identify the work scenes performed by the robot.

By identifying the work scenes which serves alternatively as work conditions, as shown in this feature, the work scenes of the robot can be more easily identified, which provides more reliably contributes to improving robot safety and work efficiency.

Feature B3 provides the robot control system according to feature B2, comprising:
a drive control unit (i.e., the drive control unit 51 equipped in the control device 50) adapted to control drive of the robot according to an operation program which are set,
wherein the scene identifying unit adapted to identify the work scent based on scene-related information included in the operation program which is subjected to an execution.

As shown in this feature, the work scenes can be identified based on scene-related information contained in the operation program. This makes it possible to realize a configuration in which the robot control system selects a determination criterion for each work scene by its own rapid decision-making. This prevents a longer waiting time from occurring in switching of the safety functions, resulting to higher contribution to improved work efficiency.

Feature B4 provides the robot control system according to feature B1, wherein
the work conditions are provided as work areas defined for each of types of the work performed by the robot, and
the situation identifying unit is provided as an area identifying unit adapted to identify the work areas in which the robot operates.

It is desirable for one robot to perform multiple tasks or multiple kinds of tasks in order to promote automation of manufacturing and other operations. However, if the safety functions of the robot are made uniform regardless of differences of the work areas, it becomes difficult to balance the improvement of safety and the improvement of work efficiency. In this respect, in the configuration shown in the present feature, the work areas are identified and the determination criterion for monitoring are changed for each work area. This can contribute to improving the safety of the robot and the work efficiency. In addition, this configuration has a clear technical significance in that, compared to a configuration in which the safety function is changed sequentially according to changes in the robot's positions and orientations, the safety can be improved while reducing undesired impact on the original control functions of the robot control system.

Feature B5 provides the robot control system according to feature B1, comprising a drive control unit adapted to control the robot such that the robot operates on a predetermined time schedule and in accordance with the operation program which is set,
wherein the predetermined time schedule is defined to perform the plurality of types of work according to times or time instants,
the work conditions are set as the times of the time instants,
the situation identifying unit is provided as a determining unit which determines the current time or the current time instant, and
the determination criteria switching unit adapted to switch the determination criterion for the parameters, which are referred by the motion judgment unit, to a determination criteria corresponding to a predetermined time or a predetermined time instant, when the time or the time instant determined by the determining unit are consistent with the predetermined time or the predetermined time instant at which the work of the robot is switched to a next work according to the predetermined time schedule.

It is desirable for one robot to be responsible for multiple tasks or multiple types of tasks in order to promote automation in manufacturing and other processes. However, if the safety functions of the robot are designed to be uniform regardless of differences of the time schedules, it becomes difficult to balance the improvement of safety and the improvement of work efficiency.

In this respect, in the configuration shown in the present feature, a time element (e.g. a time period elapsed from the start of a work routine) or a time instant at the present time is determined and the determination criterion for monitoring are changed when such determined time element is consistent wih a predetermined time element or a predetermined time instant. This can contribute to improved robot safety and increased work efficiency.

Feature B6 provides the robot control system according to any one of features B1 to B5, wherein
the work conditions include a collaborative situation (for example, the scene SN3) in which the robot operates collaboratively with a human and a non-collaborative situation (for example, the scenes SN4 and SN5) in which the robot does not operate collaboratively with a human, and
the determination criteria switching unit is adapted to differentiate the determination criterion between the collaborative and non-collaborative situations.

As shown in this feature, the work conditions of the robot include a collaborative situation and a non-collaborative situation. In this case, the safety and work efficiency of the robot can be suitably improved by differentiating the determination criterion according to those work situations.

Feature B7 provides the robot control system according to any one of features B1 to B6, wherein
the situation identifying unit is adapted to identify work conditions for a next work, and
the determination criteria switching unit is adapted to execute the switching between the work conditions used for the current work and the work conditions to be used for a next work.

When the work condition transits from the completion of the current work condition to the next work condition, the control load in the system can be suitably distributed, compared to a configuration in which the changeovers are performed during the work by switching between the two work conditions. In the case of a transition to the next work condition, it is highly likely that the distance to a person or the like will change because of changes in the work conditions. Therefore, as shown in the present feature, the configuration of switching in preparation for the next work situation is also preferable for improving the safety of the robot.

Feature B8 provides the robot control system according to any one of claims B1 to B7, wherein
the robot is configured to be emergency-stopped from operating when the motion judgement unit judges that the determination criteria is exceeded,
the robot is configured i) not to be emergency-stopped if the determination criteria is lowered responsively to switching the work conditions, even if the motion judgment unit judges that the determination criteria is exceeded, and ii) to be suppressed from operating such that the parameters are forcibly lowered without the emergency stop of the robot in a predetermined grace period continuing from lowering the determination criterion, and
the robot is then subjected to determination whether the robot should be stopped depending on a decreasing trend of the parameters which detected in the predetermined grace period.

According to the configuration shown in this feature, even if the determination criterion are lowered during switching of the work conditions, the robot does not immediately stop (i.e., not subjected to an emergency stop). In other words, the robot does not suddenly stop due to the lowering of the determination criterion. If this kind of situation occurs, the decision to stop the robot is made based on a decreasing trend of the parameters during the predetermined grace period. This configuration reduces the events causing an erroneous stop of the robot, even in a configuration where the safety functions (determination criterion) are changed with the switching of the work scenes. In this way, the suppression of erroneous robot stoppages is desirable for improving production efficiency, etc. using the robot 20.

For example, a target for changes in the parameters during the predetermined grace period may be set. In this case, it can be configured to check the changes in the parameters during the predetermined grace period and stop the robot if the changes do not reach the target.

Feature B9 provides the robot control system according to any one of features B1 to B7, wherein
the robot is configured to be emergency-stopped from operating when the motion judgement unit judges that the determination criteria is exceeded,
the switching to the work conditions and the determination criterion to be set when the conditions for a next work are assigned are specified before the switching, and
the robot is configured to be suppressed from operating such that, when there occurs an excess to the determination criterion to be set in the next work conditions during a predetermined period of time provided before the switching to the next work conditions, the parameters are forcibly lowered by deleting the excess during a period until switching to the next work conditions.

According to the configuration shown in this feature, the switching of the work conditions is specified (estimated or confirmed) in advance. Furthermore, it can be confirmed in advance during the predetermined period of time provided before the changeover that the determination criterion used in the next work condition has been exceeded. If this confirmation comes true, the motions of the robot are suppressed to forcibly lower the parameters. This will reduce the determination criterion from being exceeded at the changeover timing. This configuration reduces erroneous stops of the robot, even in a configuration where the safety functions (determination criterion) are changed with switching the work conditions. In this way, reducing the erroneous stoppages of the robot is desirable for improving production efficiency, etc. realized by the robot 20.

Feature B10 provides the robot control system according to any one of features B1 to B9, wherein
the determination criteria switching unit is adapted not to switch the determination criterion until completion of one work performed currently by the robot.

Enabling switching the determination criterion as shown in feature B1 and other features is desirable to improve the workability of the robot while taking robot safety into consideration. However, if such switching functions are provided, the following new concerns arise. That is, if switching the determination criterion suddenly occurs due to accidental reasons, etc. during a period in which the robot performs of a one task, robot motions that would not normally cause problems may be caught by the monitoring. This is a factor that unnecessarily increases the events for emergency stops, etc. of the robot and reduces its work efficiency. Therefore, as shown in the present feature, switching by the determination criteria switching unit is disabled (e.g. prohibited) in its switching function until the completion of the one task being executed, and a practically favorable configuration can be achieved by suppressing the occurrence of the above-mentioned events.

Feature B11 provided the robot control system according to any one of features B1 to B9, comprising a drive control unit adapted to control of drive the robot in accordance with an operation program which is set,
the operation program is made to include combinations of a plurality of tasks which are defined in terms of motions of the robot in the work conditions, and
the drive control unit is adapted to switch the work conditions at a timing when all of the plurality of tasks regulated in the current work conditions are completed.

As described in the above feature, the drive control unit switches the work conditions at the timing when all tasks in the current work conditions have been completed, thus preventing sudden changes to the robot's motions in the middle of a task and ensures robot safety more reliably.

Feature B12 provides the robot control system according to any one of feature B1 to B9, wherein
the parameters include a parameter indicating a position of the robot which is now in operation,
the determination criteria switching unit is adapted to enable the determination criterion for the position to be switched, when the determination criteria switching unit switches the determination criterion of the parameters of at least one of the force or speed.

Thus, the position monitoring function is added and the determination criterion of the parameters indicating the robot position can also be switched together with switchovers in the determination criterion of the parameters indicating robot force and/or speed. This prevents or reduces the monitoring of the robot's force and speed from becoming overly severe, thereby being desirable to improve the working efficiency of the robot.

### [Brief descriptions of reference numbers]

10...factory
20...robot
31...AGV
35...driving motor
41...robot arm
45...drive motor
46...rotary encoder
47...torque sensor
50...control unit
51...drive control unit
52...monitoring control unit
60...teaching pendant
E1...stock area
E2...processing area
E3...collection area
E4...aisle
CS...robot control system
X...safety-related unit
X1...input unit
X2...logic unit
X3...output unit
Y...non-safety-related unit

## Claims

1. A robot control system, comprising
a safety-related unit for comprising a motion judgment unit that judges a motion of a robot based on a safety-related input signal that includes parameters correlated with at least one of a force, a speed, and a position of the robot which is in operation and determination criterion for the parameters stored in advance, and realizing a safety function of the robot by generating a safety-related output signal depending on a judged result of the motion judgment unit, thereby realizing the safety function;
a situation identifying unit for identifying a work condition of the robot which is in operation currently, from a plurality of work conditions which are set previously for work to be performed the robot; and
a determination criterion switching unit for switching the determination criterion for the parameters, which are referred by the motion judgment unit, to a determination criterion corresponding to the work condition identified by the situation identifying unit.

2. The robot control system according to claim 1, wherein
the work conditions are work scenes performed by the robot, and
the situation identifying unit is provided as a scene identifying unit adapted to identify the work scenes performed by the robot.

3. The robot control system according to claim 2, comprising
a drive control unit adapted to control drive of the robot according to an operation program which are set,
wherein the scene identifying unit adapted to identify the work scent based on scene-related information included in the operation program which is subjected to an execution.

4. The robot control system according to claim 1, wherein
the work conditions are provided as work areas defined for each of types of the work performed by the robot, and
the situation identifying unit is provided as an area identifying unit adapted to identify the work areas in which the robot operates.

5. The robot control system according to claim 1, comprising a drive control unit adapted to control the robot such that the robot operates on a predetermined time schedule and in accordance with the operation program which is set,
wherein the predetermined time schedule is defined to perform the plurality of types of work according to times or time instants,
the work conditions are set as the times of the time instants,
the situation identifying unit is provided as a determining unit which determines the current time or the current time instant, and
the determination criterion switching unit adapted to switch the determination criterion for the parameters, which are referred by the motion judgment unit, to a determination criteria corresponding to a predetermined time or a predetermined time instant, when the time or the time instant determined by the determining unit agree with the predetermined time or the predetermined time instant at which the work of the robot is switched to a next work according to the predetermined time schedule.

6. The robot control system according to claim 1, wherein
the work conditions include a collaborative situation in which the robot operates collaboratively with a human and a non-collaborative situation in which the robot does not operate collaboratively with a human, and
the determination criterion witching unit is adapted to differentiate the determination criterion between the collaborative and non-collaborative situations.

7. The robot control system according to claim 1, wherein
the situation identifying unit is adapted to identify work conditions for a next work, and
the determination criterion witching unit is adapted to execute the switching between the work conditions used for the current work and the work conditions to be used for a next work.

8. The robot control system according to claim 1, wherein
the robot is configured to be emergency-stopped from operating when the motion judgement unit judges that the determination criteria is exceeded,
the robot is configured i) not to be emergency-stopped if the determination criteria is lowered responsively to switching the work conditions, even if the motion judgment unit judges that the determination criteria is exceeded, and ii) to be suppressed from operating such that the parameters are forcibly lowered without the emergency stop of the robot in a predetermined grace period continuing from lowering the determination criterion, and
the robot is then subjected to determination whether the robot should be stopped depending on a decreasing trend of the parameters which detected in the predetermined grace period.

9. The robot control system according to claim 1, wherein
the robot is configured to be emergency-stopped from operating when the motion judgement unit judges that the determination criteria is exceeded,
the switching to the work conditions and the determination criterion to be set when the conditions for a next work are assigned are specified before the switching, and
the robot is configured to be suppressed from operating such that, when there occurs an excess to the determination criterion to be set in the next work conditions during a predetermined period of time provided before the switching to the next work conditions, the parameters are forcibly lowered by deleting the excess during a period until switching to the next work conditions.

10. The robot control system according to claim 1, wherein
the determination criterion witching unit is adapted not to switch the determination criterion until completion of one work performed currently by the robot.

11. The robot control system according to claim 1, comprising a drive control unit adapted to control of drive the robot in accordance with an operation program which is set,
the operation program is made to include combinations of a plurality of tasks which are defined in terms of motions of the robot in the work conditions, and
the drive control unit is adapted to switch the work conditions at a timing when all of the plurality of tasks regulated in the current work conditions are completed.

12. The robot control system according to claim 1, wherein
the parameters include a parameter indicating a position of the robot which is now in operation,
the determination criterion witching unit is adapted to enable the determination criterion for the position to be switched, when the determination criterion switching unit switches the determination criterion of the parameters of at least one of the force or speed.
